# EUROPEAN PATENT APPLICATION

(11) **EP 4 528 928 A1**
(43) Date of publication of application: **26.03.2025**
(21) Application number: 23862437.3
(22) Date of filing: 06.09.2023
(51) Int. Cl.: H01Q 1/50, H01Q 1/48

(54) **ANTENNA APPARATUS AND ELECTRONIC DEVICE**

(30) Priority: 09.09.2022 CN 202211100654; 06.01.2023 CN 202310020422
(71) Applicant: Huawei Technologies Co., Ltd., Shenzhen, Guangdong 518129 (CN)
(72) Inventor: WANG, Jikang, Shenzhen, Guangdong 518129 (CN); YU, Dong, Shenzhen, Guangdong 518129 (CN); LIU, Huatao, Shenzhen, Guangdong 518129 (CN); LOU, Zhefei, Shenzhen, Guangdong 518129 (CN); XU, Tao, Shenzhen, Guangdong 518129 (CN); HUANG, Zhijun, Shenzhen, Guangdong 518129 (CN); LIU, Yu, Shenzhen, Guangdong 518129 (CN)
(74) Representative: Gill Jennings & Every LLP
(86) International application number: PCT/CN2023/117265
(87) International publication number: WO 2024/051743

(57) **Abstract**

Embodiments of this application disclose an antenna apparatus and an electronic device, including a radiator. The radiator includes a first end and a second end. A feed point and a ground point are disposed on the radiator. A distance between the feed point on the radiator and the first end is greater than a distance between the feed point and the second end. A first ground conductive member and a second ground conductive member are disposed between the feed point and the first end. One end of the ground conductive member is coupled to the radiator, and the other end of the ground conductive member is coupled to ground. The radiator is configured to generate two resonances: a first resonance and a second resonance. A frequency of the first resonance is greater than a frequency of the second resonance. Therefore, the first ground conductive member and the second ground conductive member are disposed on the radiator, so that current distribution on the radiator is more even, plane currents can be better excited, and antenna performance can be improved.

## Description

This application claims priorities to Chinese Patent Application No. 202211100654.2, filed with the China National Intellectual Property Administration on September 9, 2022 and entitled "BEZEL ANTENNA AND ELECTRONIC DEVICE", and to Chinese Patent Application No. 202310020422.4, filed with the China National Intellectual Property Administration on January 6, 2023 and entitled "ANTENNA APPARATUS AND ELECTRONIC DEVICE", which are incorporated herein by reference in their entireties.

### TECHNICAL FIELD

Embodiments of this application relate to the field of communication technologies, and in particular, to an antenna apparatus and an electronic device.

### BACKGROUND

Currently, electronic devices become thinner and lighter. In addition, to meet various functions of the electronic devices, a quantity of antennas is increasing. Therefore, a clearance area of the antenna becomes smaller. Currently, an antenna element in the electronic device such as a mobile phone is usually disposed near a bezel, or a bezel is used as an antenna body to implement communication, to obtain higher antenna system efficiency. A plurality of radiators are formed on the bezel of the electronic device, to support functions of several or tens of antennas.

However, when a hand holds the electronic device, a slot on the bezel is prone to being blocked, or radiation performance of the antenna element is affected because the hand is close to the antenna body. Therefore, in an existing mobile phone architecture, a design for a hand model needs to be considered in an antenna design. In this case, free space performance of the antenna is poor.

### SUMMARY

Embodiments of this application provide an antenna apparatus and an electronic device.

To achieve the foregoing objectives, the following technical solutions are used in embodiments of this application.

According to a first aspect of embodiments of this application, an antenna apparatus is provided, including a radiator. The radiator includes a first end and a second end. A feed point and a ground point are disposed on the radiator. A distance between the feed point on the radiator and the first end is greater than a distance between the feed point and the second end. A first ground conductive member and a second ground conductive member are disposed between the feed point and the first end. One end of the ground conductive member is coupled to the radiator, and the other end of the ground conductive member is coupled to ground. The radiator is configured to generate two resonances: a first resonance and a second resonance. A frequency of the first resonance is greater than a frequency of the second resonance. Therefore, the first ground conductive member and the second ground conductive member are disposed on the radiator, so that current distribution on the radiator is more even, plane currents can be better excited, and antenna performance can be improved.

In an optional implementation, an operating mode of the radiator includes a half-wavelength mode corresponding to the first resonance and a quarter-wavelength mode corresponding to the second resonance.

In an optional implementation, at least one of the first resonance and the second resonance is used to cover at least one band in low bands from 699 MHz to 960 MHz. Therefore, the antenna apparatus operates in a low band, and low frequency performance of the antenna apparatus can be improved.

In an optional implementation, a difference between a center frequency of the first resonance and a center frequency of the second resonance is less than or equal to 350 MHz.

In an optional implementation, the radiator is an L-shaped radiator, and a distance between the first end of the radiator and the other edge of the L-shaped radiator is within a range of 60 mm to 120 mm.

In an optional implementation, the ground conductive member and the radiator are integrally formed. In this way, the ground conductive member is more stably connected to the radiator.

In an optional implementation, at least one of the first ground conductive member and the second ground conductive member is a single conductive member. One end of the single conductive member is connected to the radiator, and the other end of the single conductive member is connected to a ground plane. Therefore, the ground conductive member is a single conductive member, and may be connected to the radiator and the ground plane after the radiator is formed, so that a position of the ground conductive member can be adjusted according to a requirement.

In an optional implementation, at least one of the first ground conductive member and the second ground conductive member includes a single conductive member and an inductive member. One end of the single conductive member is connected to the radiator. The other end of the single conductive member is connected to the inductive member. The inductive member is connected to a ground plane. Therefore, the single conductive member and the inductive member are small in size, and occupy small space, which is conducive to miniaturization of a device.

In an optional implementation, lengths of the first ground conductive member and the second ground conductive member are within a range of 4 mm to 12 mm.

In an optional implementation, lengths of the first ground conductive member and the second ground conductive member are within a range of 7 mm to 10 mm.

In an optional implementation, a length difference between the first ground conductive member and the second ground conductive member is within 4 mm.

In an optional implementation, a length difference between the first ground conductive member and the second ground conductive member is within 2 mm.

In an optional implementation, a distance between an equivalent center of the first ground conductive member and the first end of the radiator along the first ground conductive member and the radiator is less than 1/4 of a first wavelength and greater than 1/8 of the first wavelength. The first wavelength corresponds to the center frequency of the first resonance. A connection point of the second ground conductive member and the radiator is located between the feed point and a connection point of the first ground conductive member and the radiator. A distance between an equivalent center of the second ground conductive member and the second end of the radiator along the second ground conductive member and the radiator is less than 1/4 of a second wavelength and greater than 1/8 of the second wavelength. The second wavelength corresponds to the center frequency of the second resonance. The first ground conductive member and the second ground conductive member are equivalent to inductors in the antenna apparatus. The first ground conductive member is disposed, so that impedance at the first end of the radiator can be reduced. In addition, an electrical length of the first ground conductive member is adjusted, so that an equivalent inductance of the first ground conductive member can be adjusted, and current distribution on the radiator is more even. In this case, a position of a half-first-wavelength resonance mode is adjusted, to avoid uneven current distribution on the antenna apparatus caused by no current or an excessively small current at the first end of the radiator in the half-first-wavelength resonance mode. Similarly, a size of the second ground conductive member is adjusted, so that control of a distance between the second end of the radiator and the connection point of the first ground conductive member and the radiator can be adjusted, so that current distribution on the radiator is more even, and a quarter-second-wavelength resonance mode can be better excited.

In an optional implementation, a distance between the first end of the radiator and the connection point of the first ground conductive member and the radiator is 1/4 to 1/2 of a total length of the radiator.

In an optional implementation, a distance between the first end of the radiator and the connection point of the second ground conductive member and the radiator is 1/4 to 1/2 of the total length of the radiator.

In an optional implementation, a distance between a physical center of the radiator and the connection point of the second ground conductive member and the radiator is less than or equal to 5 mm.

In an optional implementation, the length of the radiator is greater than 1/2 of the second wavelength and less than 3/4 of the second wavelength. Therefore, a resonance of 1/4 of the second wavelength may be used as a main mode of the antenna apparatus.

In an optional implementation, the antenna apparatus further includes a switch. One end of the switch is coupled to the radiator. The other end of the switch is coupled to the ground plane. A coupling point of the switch and the radiator is located between the second ground conductive member and the second end. Therefore, an electrical length of the radiator from the second end to the second ground conductive member is adjusted, so that an operating frequency generated by the resonance of the radiator can change, to help the radiator cover different operating bands.

According to a second aspect of embodiments of this application, an electronic device is provided, including a bezel and the antenna apparatus described above. The bezel is disposed around a periphery of the electronic device. Therefore, the electronic device uses the foregoing antenna apparatus, and antenna performance is better.

In an optional implementation, the bezel includes a first slot, a second slot, and a conductive bezel located between the first slot and the second slot. At least a part of a radiator of the antenna apparatus is formed by the conductive bezel. Therefore, the antenna apparatus shares the conductive bezel, to save more space.

The conductive bezel includes a first side edge and a second side edge that intersect. The first side edge is longer than the second side edge. The first side edge is provided with the first slot and the second slot, and at least a part of the first side edge forms the radiator of the antenna apparatus. Altematively, the second side edge is provided with the first slot and the second slot, and at least a part of the second side edge forms the radiator of the antenna apparatus. Alternatively, the first side edge is provided with the first slot, the second side edge is provided with the second slot, and at least a part of the first side edge and at least a part of the second side edge jointly form the radiator of the antenna apparatus. Therefore, a position and a shape of the conductive bezel are flexible. The conductive bezel may be transverse line-shaped, I-shaped, or L-shaped, and is applicable to a plurality of scenarios.

In an optional implementation, the bezel is made of an insulating material, and the radiator of the antenna apparatus is disposed close to the bezel. In this way, a position of the antenna apparatus is adjustable, which facilitates debugging. The radiator disposed on an inner side of the insulating bezel is not prone to touch of a human body, so that antenna performance is not affected.

In an optional implementation, the bezel is made of an insulating material, and the antenna apparatus is embedded in the bezel. In this way, a position of the antenna apparatus is adjustable, which facilitates debugging. The radiator embedded in the insulating bezel is not prone to touch of a human body, so that antenna performance is not affected.

For that the bezel uses the insulating material, for a structure in which the antenna apparatus is connected to the bezel, and for that a shape and the position of the antenna apparatus are adjustable, the conductive bezel includes the first side edge and the second side edge that intersect, and the first side edge is longer than the second side edge. The radiator of the antenna apparatus is disposed on the first side edge; or the radiator of the antenna apparatus is disposed on the second side edge; or a part of the radiator of the antenna apparatus is disposed on the first side edge, and a part of the radiator is disposed on the second side edge. Therefore, the position and the shape of the conductive bezel are flexible. The conductive bezel may be transverse line-shaped, I-shaped, or L-shaped, and is applicable to a plurality of scenarios.

### BRIEF DESCRIPTION OF DRAWINGS

FIG. 1 is a diagram of a disassembled structure of an electronic device according to an embodiment of this application;
FIG. 2 is a diagram of a structure of an electronic device according to a related technology;
FIG. 3 is a diagram of a structure of an antenna apparatus according to a related technology;
FIG. 4 is a current diagram of the antenna apparatus shown in FIG. 3;
FIG. 5 is another current diagram of the antenna apparatus shown in FIG. 3;
FIG. 6 is a simulation diagram, of a current and a radiation direction, obtained when the antenna apparatus shown in FIG. 3 is in a free space state;
FIG. 7 is a curve diagram of a return loss coefficient (S11) of the antenna apparatus shown in FIG. 3 in a free space state;
FIG. 8 is a diagram of radiation efficiency of the antenna apparatus shown in FIG. 3;
FIG. 9 is a diagram of hot spot scatter of the antenna apparatus shown in FIG. 3;
FIG. 10 is a diagram of a structure of an electronic device according to an embodiment of this application;
FIG. 11 is a diagram of a structure of a first antenna apparatus according to an embodiment of this application;
FIG. 12 is a current diagram of the antenna apparatus shown in FIG. 11 in a first mode;
FIG. 13 is a current diagram of the antenna apparatus shown in FIG. 11 in a second mode;
FIG. 14 is a simulation diagram, of a current and a radiation direction, obtained when the antenna apparatus shown in FIG. 11 is in a free space state;
FIG. 15 is a curve diagram of a return loss coefficient (S11) of the antenna apparatus shown in FIG. 11 in a free space state;
FIG. 16 is a diagram of radiation efficiency of the antenna apparatus shown in FIG. 11;
FIG. 17 is a diagram of hot spot scatter of the antenna apparatus shown in FIG. 11;
FIG. 18 is a diagram of a structure of a second antenna apparatus according to an embodiment of this application;
FIG. 19a is a diagram of a structure of a ground conductive member according to an embodiment of this application;
FIG. 19b is a diagram of a structure of another ground conductive member according to an embodiment of this application;
FIG. 20 is a diagram of a structure of a folded display terminal in a folded state according to an embodiment of this application;
FIG. 21 is a diagram of a structure of a folded display terminal in an unfolded state according to an embodiment of this application;
FIG. 22 is a curve diagram, of a return loss of the antenna apparatus shown in FIG. 3 in a free space state, obtained when a folded display terminal is in an unfolded state;
FIG. 23 is a curve diagram, of a return loss of the antenna apparatus shown in FIG. 11 in a free space state, obtained when a folded display terminal is in an unfolded state;
FIG. 24 is a diagram, of radiation efficiency of the antenna apparatus shown in FIG. 3, obtained when a folded display terminal is in an unfolded state;
FIG. 25 is a diagram, of radiation efficiency of the antenna apparatus shown in FIG. 11, obtained when a folded display terminal is in an unfolded state;
FIG. 26 is a curve diagram, of a return loss coefficient (S22) of the antenna apparatus shown in FIG. 3 in a free space state, obtained when a folded display terminal is in a folded state;
FIG. 27 is a curve diagram, of a return loss coefficient (S22) of the antenna apparatus shown in FIG. 11 in a free space state, obtained when a folded display terminal is in a folded state;
FIG. 28 is a diagram, of radiation efficiency of the antenna apparatus shown in FIG. 3, obtained when a folded display terminal is in a folded state;
FIG. 29 is a diagram, of radiation efficiency of the antenna apparatus shown in FIG. 11, obtained when a folded display terminal is in a folded state;
FIG. 30 is a diagram of a position of the antenna apparatus shown in FIG. 11 in an electronic device;
FIG. 31a is an electric field diagram, of an antenna apparatus in a first mode, obtained when an electronic device is in a holding state;
FIG. 31b is an electric field diagram, of an antenna apparatus in a second mode, obtained when an electronic device is in a holding state;
FIG. 32 is an efficiency curve diagram, of an antenna apparatus, obtained when an electronic device is in a holding state and in a free space state;
FIG. 33 is an efficiency curve diagram, of the antenna apparatus shown in FIG. 3, obtained when a height of the antenna apparatus is 90 mm;
FIG. 34 is a diagram of a structure of a third antenna apparatus according to an embodiment of this application;
FIG. 35 is an efficiency curve diagram obtained when a height of an antenna apparatus is 110 mm;
FIG. 36 is a diagram of a structure of another electronic device according to an embodiment of this application;
FIG. 37 is a diagram of a structure of a fourth antenna apparatus according to an embodiment of this application;
FIG. 38 is an efficiency curve diagram of the antenna apparatus shown in FIG. 37;
FIG. 39 is a diagram of a structure of a seventh antenna apparatus according to an embodiment of this application;
FIG. 40 is a diagram of a structure of an eighth antenna apparatus according to an embodiment of this application;
FIG. 41 is an efficiency curve diagram of an antenna apparatus, with a ground conductive member, disposed on a side bezel of an electronic device;
FIG. 42 is a diagram of hot spot scatter of an antenna apparatus, with a ground conductive member, disposed on a side bezel of an electronic device;
FIG. 43 is another efficiency curve diagram of an antenna apparatus, with a ground conductive member, disposed on a side bezel of an electronic device;
FIG. 44 is another diagram of hot spot scatter of an antenna apparatus, with a ground conductive member, disposed on a side bezel of an electronic device;
FIG. 45 is a diagram of a structure of a ninth antenna apparatus according to a related technology;
FIG. 46 is an efficiency curve diagram of the antenna apparatus shown in FIG. 45;
FIG. 47 is a diagram of hot spot scatter of the antenna apparatus shown in FIG. 45;
FIG. 48 is a diagram of a structure of a tenth antenna apparatus according to an embodiment of this application;
FIG. 49 is an efficiency curve diagram of the antenna apparatus shown in FIG. 48;
FIG. 50 is a diagram of hot spot scatter of the antenna apparatus shown in FIG. 48;
FIG. 51 is a diagram of a structure of an antenna according to an embodiment of this application;
FIG. 52 is a diagram of a structure of another antenna according to an embodiment of this application; and
FIG. 53 is a diagram of a structure of another antenna according to an embodiment of this application.

### DESCRIPTION OF EMBODIMENTS

To make objectives, technical solutions, and advantages of this application clearer, the following further describes this application in detail with reference to the accompanying drawings.

Hereinafter, the terms "first", "second", and the like are used only for descriptive purposes, and cannot be understood as indicating or implying relative importance or implicitly indicating a quantity of indicated technical features. Therefore, a feature limited by "first", "second", or the like may explicitly or implicitly include one or more features. In descriptions of this application, unless otherwise stated, "a plurality of" means two or more than two.

In addition, in this application, position terms such as "top" and "bottom" are defined relative to illustrative positions of components in the accompanying drawings. It should be understood that these position terms are relative concepts and are used for relative description and clarification, and may correspondingly change based on changes in the positions of the components in the accompanying drawings.

The following describes terms that may occur in embodiments of this application.

Coupling: The coupling may be understood as direct coupling and/or indirect coupling, and a "coupling connection" may be understood as a direct coupling connection and/or an indirect coupling connection. The direct coupling may also be referred to as an "electrical connection", which may be understood as physical contact and electrical conduction of components, or may be understood as a form in which different components in a line structure are connected through a physical line that can transmit an electrical signal, such as a printed circuit board (printed circuit board, PCB) copper foil or a conducting wire. The "indirect coupling" may be understood as electrical conduction of two conductors in mid-air or in a non-contact manner. In an embodiment, the indirect coupling may also be referred to as capacitive coupling. For example, an equivalent capacitor is formed through coupling of a gap between two conductive members, to implement signal transmission.

Connection: Two or more components are conducted or connected in the foregoing "electrical connection" or "coupling connection" manner to perform signal/energy transmission, which may be referred to as the connection.

Antenna pattern: The antenna pattern is also referred to as a radiation pattern. The antenna pattern is a pattern in which relative field strength (a normalized modulus value) of an antenna radiation field changes with a direction at a specific distance from the antenna. The antenna pattern is usually indicated by two plane patterns that are perpendicular to each other in a maximum radiation direction of an antenna.

The antenna pattern usually includes a plurality of radiation beams. A radiation beam with a highest radiation strength is referred to as a main lobe, and a remaining radiation beam is referred to as a side lobe or a minor lobe. In the side lobe, a side lobe in an opposite direction of the main lobe is also referred to as a back lobe.

Antenna return loss: The antenna return loss may be understood as a ratio of power of a signal reflected back to an antenna port through an antenna circuit to transmit power of the antenna port. A smaller reflected signal indicates a larger signal radiated by an antenna to space and higher radiation efficiency of the antenna. A larger reflected signal indicates a smaller signal radiated by the antenna to space and lower radiation efficiency of the antenna.

The antenna return loss may be represented by an S11 parameter, and the S11 parameter is usually a negative number. A smaller S11 parameter indicates a smaller antenna return loss and higher radiation efficiency of the antenna. A larger S11 parameter indicates a larger antenna return loss and lower radiation efficiency of the antenna.

Antenna isolation: The antenna isolation is a ratio of power of a signal transmitted by an antenna to power of a signal received by another antenna.

Antenna system efficiency: The antenna system efficiency is a ratio of power radiated by an antenna to space (that is, power effectively converted into an electromagnetic wave part) to input power of the antenna.

Antenna radiation efficiency: The antenna radiation efficiency is a ratio of power radiated by an antenna to space (that is, power effectively converted into an electromagnetic wave part) to active power input to the antenna. Herein, the active power input to the antenna=input power of the antenna-antenna loss. The antenna loss mainly includes an ohmic loss and/or a dielectric loss of metal.

Capacitor: The capacitor may be understood as a lumped capacitor and/or a distributed capacitor. The lumped capacitor is a capacitive component, for example, a capacitive element. The distributed capacitor (or distribution capacitor) is an equivalent capacitor formed by a gap between two conductive members.

Equivalent center: The equivalent center mentioned in embodiments of this application may be understood as a physical center. For example, an equivalent center of a conductor may be a physical center of the conductor. When the conductor is a straight strip-shaped, bent strip-shaped, arc-shaped, or irregularly shaped conductive body, the physical center of the conductor may be the middle (position) of the conductor in an extension direction.

Open end and closed end: In some embodiments, the open end/closed end is, for example, relative to whether to be grounded. The closed end is grounded, and the open end is not grounded. In some embodiments, the open end/closed end is, for example, relative to another conductive body. The closed end is electrically connected to the another conductive body, and the open end is not electrically connected to the another conductive body. In an embodiment, the open end may also be referred to as an opening end or an open-circuit end. In an embodiment, the closed end may also be referred to as a ground end or a short-circuit end.

Feed point, ground point, and connection point: "Point" in the feed point, the ground point, or the connection point disposed on an antenna radiator cannot be narrowly and necessarily understood as a point, and may be alternatively considered as a segment, of a radiator, that is on the antenna radiator and that is coupled to a feed circuit, a ground circuit, or another circuit. In an embodiment, the "point" may include a coupling area that is on the antenna radiator and that is coupled to another conductive structure. For example, the feed point may be a connection area that is on the antenna radiator and that has an electrical connection or coupling connection to a part of the feed circuit (for example, an area facing the part of the feed circuit). The ground point and the connection point can be understood in a similar way.

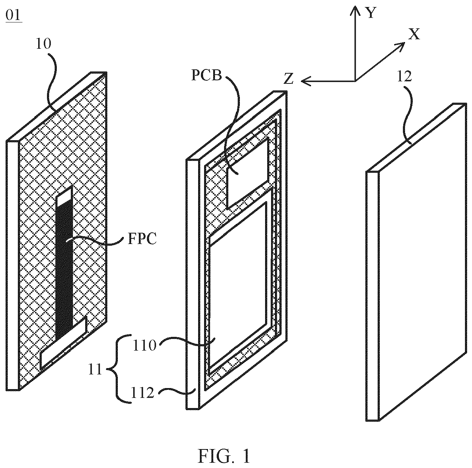

The technical solutions provided in embodiments this application are applicable to an electronic device that uses one or more of the following communication technologies: a Bluetooth (Bluetooth, BT) communication technology, a global positioning system (global positioning system, GPS) communication technology, a wireless fidelity (wireless fidelity, Wi-Fi) communication technology, a global system for mobile communications (global system for mobile communications, GSM) communication technology, a wideband code division multiple access (wideband code division multiple access, WCDMA) communication technology, a long term evolution (long term evolution, LTE) communication technology, a 5G communication technology, and other future communication technologies. The electronic device in embodiments of this application may be a mobile phone, a tablet computer, a notebook computer, a smart household, a smart band, a smart watch, a smart helmet, smart glasses, or the like. Alternatively, the electronic device may be a handheld device that has a wireless communication function, a computing device, another processing device connected to a wireless modem, a vehicle-mounted device, an electronic device in a 5G network, an electronic device in a future evolved public land mobile network (public land mobile network, PLMN), or the like. This is not limited in embodiments of this application. FIG. 1 shows an example of an electronic device provided in an embodiment of this application. An example in which the electronic device is a mobile phone is used for description.

As shown in FIG. 1, the electronic device 01 includes a cover 10, a middle frame 11, and a rear cover 12. The middle frame 11 is located between the cover 10 and the rear cover 12.

The cover 10, the middle frame 11, and the rear cover 12 may be separately disposed at different layers in a thickness direction of the electronic device. These layers may be parallel to each other. A plane in which each layer is located may be referred to as an X-Y plane, and a direction perpendicular to the X-Y plane may be referred to as a Z direction. In other words, the cover 10, the middle frame 11, and the rear cover 12 may be distributed in layers in the Z direction.

In some embodiments, the electronic device 01 further includes a display module, and the display module is located in an area enclosed by the cover 10 and the middle frame 11. The display module is configured to display an image. In some embodiments of this application, the display module includes a liquid crystal display (liquid crystal display, LCD) module and a backlight module (backlight unit, BLU). Alternatively, in some other embodiments of this application, the display module may be an organic light-emitting diode (organic light-emitting diode, OLED) display.

The middle frame 11 includes a bearing board 110 and a bezel 112 that surrounds the bearing board 110.

Electronic components such as a printed circuit board (printed circuit board, PCB), a camera, and a battery may be disposed on a surface that is of the bearing board 110 and that faces the rear cover 12. The camera and the battery are not shown in the figure. The rear cover 12 is connected to the middle frame 11 to form an accommodation cavity used to accommodate the electronic components such as the PCB, the camera, and the battery. In this way, outside moisture and dust can be prevented from entering the accommodation cavity and affecting performance of the electronic components.

The display module may be electrically connected to the PCB disposed on the bearing board 110 after a flexible printed circuit (flexible printed circuit, FPC) shown in FIG. 1 goes through the bearing board 110. In this way, the PCB can transmit display data to the display module, to control the display module to display an image.

The middle frame 11 mainly supports the entire device. In an embodiment, the middle frame 11 including the bezel 112 is used as an integrated component, and may support the electronic components in the entire device. The cover 10 and the rear cover 12 are separately closed along an upper edge and a lower edge of the bezel 112, to form a casing or housing (housing) of the electronic device. In an embodiment, the bezel 112 may not be considered as a part of the middle frame 11. In an embodiment, the bezel 112 and the middle frame 11 may be connected and integrally formed. In another embodiment, the bezel 112 may include a protruding member extending inward, to be connected to the middle frame 11, for example, connected by using a spring or a screw, or connected through welding. In an embodiment, the cover 10, the rear cover 12, the bezel 112, and the middle frame 11 may be collectively referred to as the casing or housing of the electronic device 01. It should be understood that the "casing or housing" may be used to refer to a part or all of any one of the cover 10, the rear cover 12, the bezel 112, or the middle frame 11, or refer to a part or all of any combination of the cover 10, the rear cover 12, the bezel 112, or the middle frame 11.

The rear cover 12 may be a rear cover made of a metal material; or may be a rear cover made of a non-conductive material, for example, a non-metal rear cover such as a glass rear cover or a plastic rear cover; or may be a rear cover made of both a conductive material and a non-conductive material.

In an embodiment, the rear cover 12 including the conductive material may replace the middle frame 11 to serve as an integrated component with the bezel 112, to support the electronic components in the entire device.

In an embodiment, the middle frame 11 and/or a conductive part of the rear cover 12 may be used as a reference ground of the electronic device 01. The bezel 112, the PCB 17, and the like of the electronic device may be electrically connected to the middle frame to be grounded.

In an embodiment, at least a part of the bezel 112 may serve as an antenna radiator to receive/send a radio frequency signal. A gap may exist between the part of the bezel serving as the radiator and another part of the middle frame 11 or exist between the part of the bezel serving as the radiator and the middle frame 11, to ensure that the antenna radiator has a good radiation environment. In an embodiment, an aperture may be provided near the part of the bezel serving as the antenna radiator. In an embodiment, the aperture may include an internal aperture provided in the electronic device 01, for example, an aperture invisible from an appearance surface of the electronic device 01. In an embodiment, the internal aperture may be formed by any one of or jointly formed by a plurality of the middle frame, the battery, a circuit board, the rear cover, a display, and another internal conductive member. For example, the internal aperture may be formed by a mechanical part of the middle frame. In an embodiment, the aperture may further include a slot/slit/hole provided on the bezel 112. In an embodiment, the slot/slit/hole on the bezel 112 may be a gap formed on the bezel, and the bezel 112 is divided into two parts without a direct connection relationship at the gap. In an embodiment, the aperture may further include a slot/slit/hole provided on the rear cover 12 or the display 15. In an embodiment, the rear cover 12 includes a conductive material, and an aperture provided on the conductive material may be connected to the slit or the gap of the bezel, to form a continuous aperture on the appearance surface of the electronic device 01.

In an embodiment, the bezel 112 includes the protruding member extending inward. The protruding member is configured to be connected to another part of the middle frame 11, or configured to be connected to the middle frame 11 (in an embodiment, the protruding member and the middle frame may alternatively be integrally formed). In an embodiment, the protruding member includes a conductive material, and may be further configured to receive a feed signal or be connected to a ground plane, so that the corresponding part of the bezel receives/sends the radio frequency signal.

In an embodiment, an antenna of the electronic device 01 may be further disposed in the bezel 112. The bezel 112 includes a non-conductive material. The antenna radiator may be located in the electronic device 01 and disposed along the bezel 112, or at least a part of the antenna radiator may be embedded in the non-conductive material of the bezel. In an embodiment, the antenna radiator is disposed close to the non-conductive material of the bezel 112, to minimize a volume occupied by the antenna radiator, and enable the antenna radiator to be closer to the outside of the electronic device 01, so as to achieve better signal transmission effect. It should be noted that, that the antenna radiator is disposed close to the bezel 112 means that the antenna radiator may be tightly attached to the bezel 112, or may be disposed near the bezel 112. For example, there may be a specific small gap between the antenna radiator and the bezel 112.

In an embodiment, the antenna, for example, a support antenna or a millimeter-wave antenna (not shown in FIG. 1), of the electronic device 01 may alternatively be disposed in the casing. A gap may exist between the antenna disposed in the casing and another conductive member in the casing, to ensure that the antenna radiator has a good radiation environment. In an embodiment, an aperture may be provided near the antenna radiator. In an embodiment, the aperture may include an internal aperture provided in the electronic device 01, for example, an aperture invisible from the appearance surface of the electronic device 01. In an embodiment, the internal aperture may be formed by any one of or jointly formed by a plurality of the bezel, the middle frame, the battery, the circuit board, the rear cover, the display, and another internal conductive member. For example, the internal aperture may be formed by a mechanical part of the middle frame. In an embodiment, the aperture may further include a slot/slit/hole provided on the bezel 112. In an embodiment, the slot/slit/hole on the bezel 112 may be a gap formed on the bezel, and the bezel 112 is divided into two parts without a direct connection relationship at the gap. In an embodiment, the aperture may further include a slot/slit/hole provided on the rear cover 12 or the display 15. In an embodiment, the rear cover 12 includes a conductive material, and an aperture provided on the conductive material may be connected to the slit or the gap of the bezel, to form a continuous aperture on the appearance surface of the electronic device 01. In an embodiment, the aperture on the rear cover 12 or the display may alternatively be used to place another component, such as the camera, and/or a sensor, and/or a microphone, and/or a loudspeaker, and/or the like.

In an embodiment, a form of the antenna may be an antenna form based on a flexible mainboard (Flexible Printed Circuit, FPC), an antenna form based on laser-direct-structuring (Laser-Direct-structuring, LDS), or an antenna form such as a microstrip antenna (Microstrip Disk Antenna, MDA). In an embodiment, the antenna may alternatively use a transparent or semitransparent structure embedded in a screen of the electronic device 01, so that the antenna is a transparent antenna element embedded in the screen of the electronic device 01.

In an embodiment, a metal layer may be disposed on the printed circuit board PCB. The metal layer may be used to ground an electronic element carried on the printed circuit board PCB, or may be used to ground another element, for example, a support antenna or an antenna apparatus. The metal layer may be referred to as a ground plane, a ground plane, or a grounding plane.

In an embodiment, metal may be etched on a surface of any dielectric plate in the PCB, to form the metal layer.

In an embodiment, the metal layer used for grounding may be disposed on a side that is of the printed circuit board PCB and that is close to the middle frame 11.

In an embodiment, an edge of the printed circuit board PCB may be considered as an edge of the grounding plane of the printed circuit board.

In an embodiment, the middle frame 11 may also be configured to ground the foregoing element. The electronic device 01 may further have another ground plane/ground plane/grounding plane, as described above. Details are not described herein again.

Due to compactness in the electronic device, a ground plane/ground plane/grounding plane (for example, the printed circuit board, the middle frame, a metal layer of the screen, the battery, and the like may all be considered as a part of the ground plane) is usually disposed in internal space that is 0 mm to 2 mm away from an inner surface of the bezel. In an embodiment, a medium is filled between the bezel and the ground plane. A length and a width of a rectangle enclosed by an inner surface contour of the filled medium may be simply considered as a length and a width of the ground plane. Alternatively, a length and a width of a rectangle enclosed by a contour formed by superposing all conductive parts inside the bezel may be considered as a length and a width of the ground plane.

The electronic device further includes an antenna element. A position of the antenna element in the electronic device is not limited in this application. For example, the antenna element may be manufactured by using a conductive bezel of the electronic device such as a mobile phone, or may be disposed by using the printed circuit board of the electronic device, or may be disposed on the printed circuit board of the electronic device by using a support. An antenna form of the antenna element is not limited in this application.

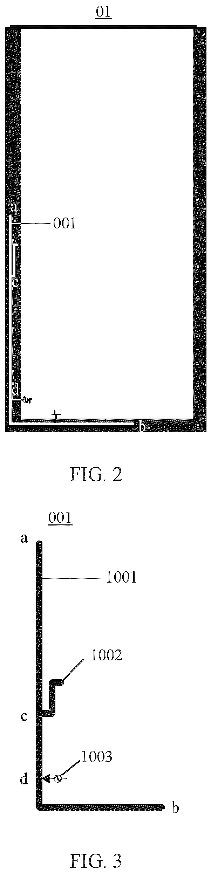

The following uses an example in which at least a part of a radiator of an antenna apparatus 001 is formed by the conductive bezel for description. The antenna apparatus 001 is shown in FIG. 2. The antenna apparatus 001 is configured to transmit an electromagnetic wave and receive an electromagnetic wave.

In some embodiments of this application, the radiator of the antenna apparatus 001 includes at least a part of the bezel 112 of the electronic device shown in FIG. 1. The bezel 112 may be disposed around, for example, a periphery of the electronic device, and includes a conductive bezel part.

The bezel 112 has a first slot and a second slot. The conductive bezel part is located between the first slot and the second slot, and may be used as a radiator part of the antenna apparatus 001. It should be understood that the slot on the bezel 112 may be referred to as a gap, which indicates that a first conductive bezel part and a second conductive bezel part of the bezel may be disconnected at the slot. In an embodiment, the slot/gap may be filled with a non-conductive material to form an overall continuous bezel.

For example, the conductive bezel includes a first side edge and a second side edge that intersect, and the first side edge is longer than the second side edge. In some embodiments, the first slot and the second slot are provided on the first side edge, and at least a part of the first side edge forms the radiator of the antenna apparatus 001.

Alternatively, the first slot and the second slot are provided on the second side edge, and at least a part of the second side edge forms the radiator of the antenna apparatus 001.

Alternatively, the first slot is provided on the first side edge, the second slot is provided on the second side edge, and at least a part of the first side edge and at least a part of the second side edge jointly form the radiator of the antenna apparatus 001.

In some other embodiments of this application, the bezel 112 includes a non-conductive material such as plastic or resin. The radiator of the antenna apparatus 001 is, for example, disposed on an inner side of the non-conductive material. Alternatively, the radiator of the antenna apparatus 001 may be formed by a conductive radiator embedded in the non-conductive material.

In addition, the antenna apparatus 001 may transmit or receive a signal by using a bezel formed by a conductive material. Alternatively, a conductive radiator disposed on an inner side of a bezel formed by the non-conductive material or a conductive radiator embedded in the bezel formed by the non-conductive material may be used to transmit or receive a signal.

For example, the conductive bezel includes a first side edge and a second side edge that intersect, and the first side edge is longer than the second side edge. In some embodiments of this application, the radiator of the antenna apparatus is disposed on the first side edge.

Alternatively, the radiator of the antenna apparatus is disposed on the second side edge.

Alternatively, at least a part of the radiator of the antenna apparatus is disposed on the first side edge, and at least a part of the radiator is disposed on the second side edge. Therefore, a position and a shape of the radiator of the antenna apparatus are flexible. The radiator of the antenna apparatus may be transverse line-shaped, I-shaped, or L-shaped, and is applicable to a plurality of scenarios.

In an embodiment, refer to FIG. 2 and FIG. 3. The antenna apparatus 001 includes a radiator 1001. The radiator 1001 includes a first end a and a second end b that are opposite to each other. A ground point c and a feed point d are disposed on the radiator 1001. Both the first end a and the second end b of the radiator 1001 are open ends. For example, in an embodiment, the first end a and the second end b respectively correspond to a position of the first slot and a position of the second slot, and the open end is implemented by using a slot/gap on a bezel.

In an embodiment, the radiator is disposed on an inner side of a non-conductive bezel, and the first end a and the second end b are not electrically connected to another conductive member.

The ground point c and the feed point d are spaced and disposed on the radiator 1001. The ground point c may be located between the feed point d and the first end a, or may be located between the feed point d and the second end b.

In the embodiment shown in FIG. 2, the first end a is located on a first edge of a bezel 10, and the second end b is located on a second edge of the bezel 10. The first edge is located on a side edge of the electronic device 001, and the second edge is located on a bottom edge of the electronic device 001.

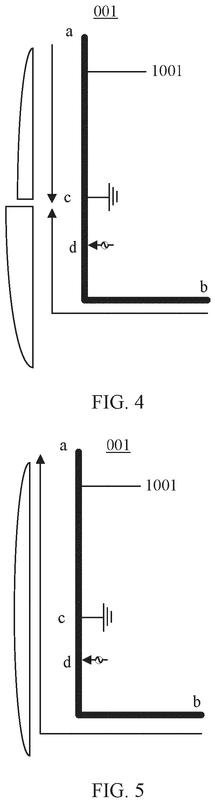

In some embodiments, as shown in FIG. 4, a length from the first end a of the radiator 1001 to the feed point d is greater than a length from the feed point d to the second end b of the radiator 1001. In an embodiment, a length from the first end a of the radiator 1001 to the ground point c is less than a length from the ground point c to the second end b of the radiator 1001.

In an embodiment, the ground point c is grounded by using a ground conductive member. One end of the ground conductive member is coupled to the radiator 101, and the other end of the ground conductive member is coupled to ground.

In an embodiment, the ground conductive member may also be referred to as a ground continuous rib. In an embodiment, the antenna apparatus 001 includes two ground conductive members.

In an embodiment, an electrical length from the second end b of the radiator 1001 to the ground point c is approximately 1/4 of a first wavelength, so that a resonance of the first wavelength can be generated in a section from the second end b of the radiator 1001 to the ground point c. The resonance of the first wavelength corresponds to a quarter-wavelength mode, which is also referred to as a quarter mode. The resonance of the first wavelength may also be referred to as a quarter-wavelength-mode resonance or a quarter-mode resonance.

A pattern in FIG. 4 is used to represent an example of current amplitudes in the quarter mode. A narrow part of the pattern represents that a current amplitude is small, and a wide part of the pattern represents that a current amplitude is large. It should be understood that the radiator shown in the figure is bent, the current amplitude is a simple example, and bent current amplitude distribution is not shown.

It should be understood that current distribution in the quarter mode is shown as currents flowing in a same direction between a ground end and an open end. At the ground end, a current amplitude is the largest (for example, a current antinode), and at the open end, a current amplitude is the smallest (for example, a current node). At a phase (phase), the current distribution in the quarter mode is shown by arrows in FIG. 4. A current flows from the first end a of the radiator 1001 to the ground point c, and/or a current flows from the second end b of the radiator 1001 to the ground point c. At the ground point c, a current amplitude is the largest (for example, a current antinode). In an embodiment, at the first end a, a current amplitude is the smallest (for example, a current node). In an embodiment, at the second end b, a current amplitude is the smallest (for example, a current node). In an embodiment, the radiator may include two open ends, and a ground end/ground point between the two open ends. For example, in the embodiment shown in FIG. 4, currents separately flow from the first end a and the second end b of the radiator 1001 to the ground point c. At the ground point c, a current amplitude is the largest (for example, a current antinode), and currents on two sides of the ground point c are in opposite directions. At the first end a and the second end b, current amplitudes are the smallest (for example, current nodes). This may also be considered as meeting the current distribution in the quarter mode. In an embodiment, FIG. 4 shows current distribution at a phase of 0°. It should be understood that, at another phase (for example, a phase of 180°), a current direction is opposite to that in FIG. 4. To be specific, currents separately flow from the ground point c to the first end a and the second end b of the radiator 1001. At the ground point c, a current amplitude is the largest, and currents on two sides of the ground point c are in opposite directions.

It should be further understood that the quarter mode shown in FIG. 4 may be mainly generated by a part from the second end b of the radiator 1001 to the ground point c. In an embodiment, an adjustment of a position of the second end b and/or a position of the ground point c, and/or an adjustment of a total length from the second end b to the ground point c cause/causes a clear frequency offset of the resonance, of the first wavelength, corresponding to the quarter mode. For example, a frequency of the resonance is roughly inversely proportional to the total length. In an embodiment, an adjustment of a position of the first end a, and/or an adjustment of a total length from the first end a to the ground point c basically do/does not cause a clear frequency offset of the resonance of the first wavelength, but may affect radiation efficiency of the resonance of the first wavelength.

In this embodiment of this application, a current distribution characteristic of the "quarter-wavelength mode or quarter mode" is that currents flow in a same direction between a ground end and an open end of a radiator. In an embodiment, the current distribution characteristic of the "quarter-wavelength mode or quarter mode" may alternatively be that currents flow between open ends of a radiator and are reversed in the middle. In this embodiment of this application, the "quarter-wavelength-mode resonance or quarter-mode resonance" may be understood as a resonance mainly generated by currents in the quarter mode.

In an embodiment, an electrical length from the first end a to the second end b is approximately 1/2 of a second wavelength, and the radiator 1001 can generate a resonance of the second wavelength between the first end a and the second end b. The resonance of the second wavelength corresponds to a half-wavelength mode, which is also referred to as a half mode. The resonance of the second wavelength may also be referred to as a half-wavelength-mode resonance or a half-mode resonance.

A pattern in FIG. 5 is used to represent an example of current amplitudes in the half mode. A narrow part of the pattern represents that a current amplitude is small, and a wide part of the pattern represents that a current amplitude is large. It should be understood that the radiator shown in the figure is bent, the current amplitude is a simple example, and bent current amplitude distribution is not shown.

It should be understood that current distribution in the half mode is shown as currents flowing in a same direction between an open end and another open end. Between the two open ends, there is a largest current amplitude point (for example, a current antinode). At the two open ends, current amplitudes are the smallest (for example, current nodes). At a phase, the current distribution in the half mode is shown by arrows in FIG. 5. Currents separately flow from the second end b of the radiator 1001 to the first end a. At the first end a and the second end b, current amplitudes are the smallest (for example, current nodes) and currents are in a same direction. In the middle of the electrical length from the first end a to the second end b, a current amplitude is the largest (for example, a current antinode) and currents are in a same direction. In an embodiment, FIG. 5 shows current distribution at a phase of 0°. It should be understood that, at another phase (for example, a phase of 180°), a current direction is opposite to that in FIG. 5. To be specific, currents flow from the first end a of the radiator 1001 to the second end b. At the first end a and the second end b, current amplitudes are the smallest (for example, current nodes) and currents are in a same direction. In the middle of the electrical length from the first end a to the second end b, a current amplitude is the largest (for example, a current antinode) and currents are in a same direction.

It should be further understood that the half mode may be generated by a part from the first end a to the second end b of the radiator 1001. In an embodiment, an adjustment of a total length from the first end a to the second end b causes a clear frequency offset of the resonance, of the second wavelength, corresponding to the half mode. For example, a frequency of the resonance is roughly inversely proportional to the total length.

In this embodiment of this application, a current distribution characteristic of the "half-wavelength mode or half mode" is that currents flow in a same direction between open ends of a radiator. In this embodiment of this application, the "half-wavelength-mode resonance or half-mode resonance" may be understood as a resonance mainly generated by currents in the half mode.

In some embodiments, the first wavelength is greater than the second wavelength. In other words, the frequency of the resonance of the first wavelength is less than the frequency of the resonance of the second wavelength. This avoids generating an efficiency pit in a same operating band (for example, a B28 band, a B5 band, or a B8 band), so that the antenna apparatus can have good radiation performance in the operating band. In an embodiment, a difference between a center frequency of the resonance of the first wavelength and a center frequency of the resonance of the second wavelength is approximately 250 MHz.

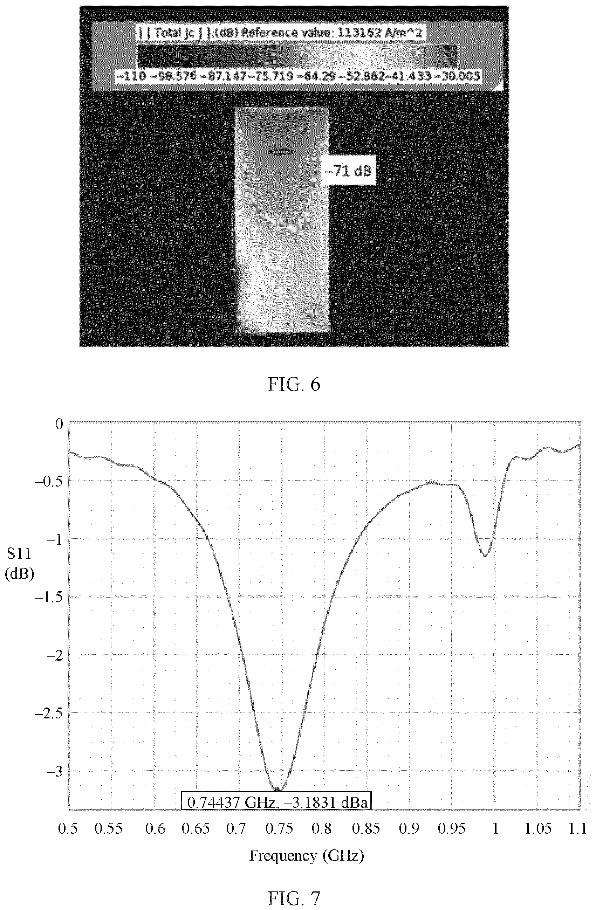

FIG. 6 is a simulation diagram, of a current and a radiation direction, obtained when the antenna apparatus shown in FIG. 3 is in a free space state.

FIG. 7 is a curve diagram of a return loss coefficient (S11) of the antenna apparatus shown in FIG. 3 in a free space state.

In FIG. 7, a horizontal coordinate indicates a frequency (unit: GHz), and a vertical coordinate indicates a return loss coefficient (unit: dB). A curve indicates the curve diagram, of the return loss coefficient of the antenna apparatus 001, obtained when the electronic device 01 is in the free space state.

The free space state is a state in which the electronic device 01 is not in contact with a human body or a conductor, and is less affected by the outside. When the electronic device 01 is held by a hand and the antenna apparatus is in a hand-held state, the antenna apparatus 001 is prone to being affected by the human body.

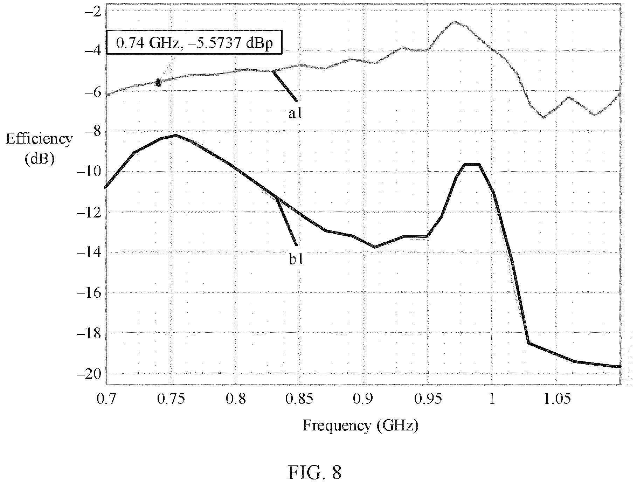

FIG. 8 is a diagram of radiation efficiency of the antenna apparatus shown in FIG. 3.

In FIG. 8, a horizontal coordinate indicates a frequency (unit: GHz), and a vertical coordinate indicates efficiency (unit: dB). A curve a1 represents a curve diagram, of radiation efficiency of the antenna apparatus 001, obtained when the electronic device 01 is in a free space state, and a curve b1 is a curve of system efficiency of the antenna apparatus 001.

It can be easily learned from FIG. 6 and FIG. 7 that, in the free space state, the antenna apparatus 001 has two antenna modes, so that the antenna apparatus 001 has a wide bandwidth. In addition, patterns of the two antenna modes complement each other in specific space, so that the antenna apparatus 001 can have good radiation efficiency in each direction, and normal operation of the antenna apparatus 001 is not affected when the electronic device 01 is held by a hand. In addition, it can be further learned from FIG. 6 and FIG. 8 that the antenna apparatus 001 has good radiation efficiency.

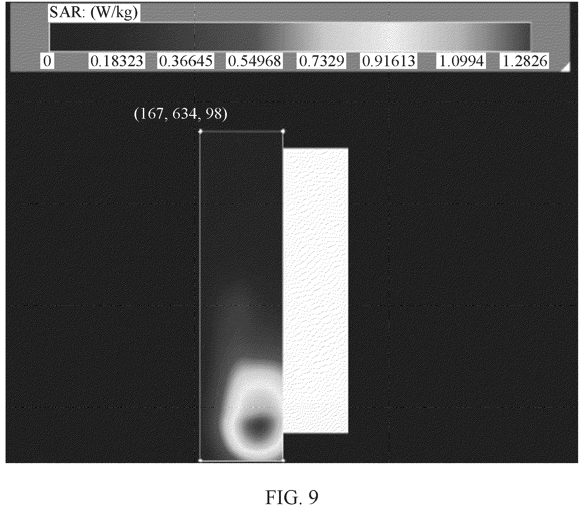

FIG. 9 is a diagram of hot spot scatter of an antenna apparatus 001 of an example structure of the electronic device 01 shown in FIG. 2. As shown in FIG. 9, a specific absorption rate (Specific Absorption Rate, SAR) of the antenna apparatus 001 is large, and hot spots are not scattered enough.

An embodiment of this application further provides an antenna apparatus and an electronic device with the antenna apparatus.

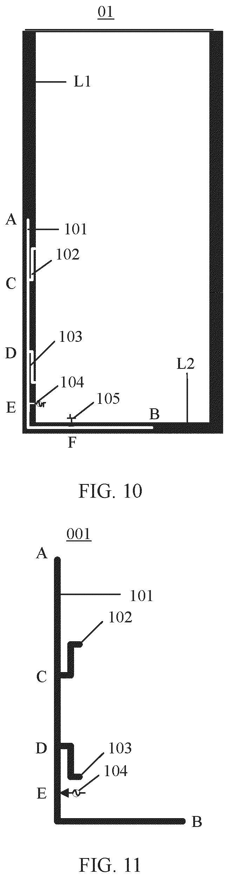

FIG. 10 is a diagram of a structure of an electronic device according to an embodiment of this application. As shown in FIG. 10, a part of an antenna apparatus 001 is disposed on a side edge of the electronic device 01. The antenna apparatus 001 includes a radiator 101, and the radiator 101 includes a first end A and a second end B that are opposite to each other. Both the first end A and the second end B are open ends. In an embodiment, a distance dAE between a feed point E on the radiator 101 and the first end A is greater than a distance dBE between the feed point E and the second end B. In an embodiment, (dAE-dBE)≥5 mm. In an embodiment, 5 mm≤(dAE-dBE)≤10 mm. Alternatively, (dAE-dBE) and a total length L of the radiator 101 satisfies (dAE-dBE)≥1/10*L.

In the embodiment shown in FIG. 10, the electronic device 01 includes a first side edge L1 and a second side edge L2 that intersect. The first side edge L1 is longer than the second side edge L2. The first end A is located on the first side edge L1, and the second end B is located on the second side edge L2. In an embodiment, the first end A is located on the second side edge L2, and the second end B is located on the first side edge L1. In an embodiment, both the first end A and the second end B are located on the first side edge L1. In an embodiment, both the first end A and the second end B are located on the second side edge L2.

In an embodiment, a first slot is provided on the first side edge L1, a second slot is provided on the second side edge L2, and at least a part of the first side edge and at least a part of the second side edge jointly form the radiator 101.

In an embodiment, a first slot and a second slot are provided on the first side edge L1, and at least a part of the first side edge L1 forms the radiator 101.

In an embodiment, a first slot and a second slot are provided on the second side edge L2, and at least a part of the second side edge forms the radiator 101.

Both the first end A and the second end B of the radiator 101 are open ends. For example, in an embodiment, the first end A and the second end B respectively correspond to a position of the first slot and a position of the second slot, and the open end is implemented by using a slot/gap on a bezel. In an embodiment, the radiator is disposed on an inner side of a non-conductive bezel, and the first end a and the second end b are not electrically connected to another conductive member.

FIG. 11 is a diagram of a structure of an antenna apparatus 001 according to an embodiment of this application. As shown in FIG. 11, a first ground conductive member 102 and a second ground conductive member 103 are disposed between the feed point E and the first end A. One end of the ground conductive member is coupled to the radiator 101, and the other end of the ground conductive member is coupled to ground.

Coupling and being coupled to ground include direct coupling (including an electrical connection) and indirect coupling (with a gap).

In an embodiment, the ground conductive member may also be referred to as a ground continuous rib. In an embodiment, the antenna apparatus 001 includes two ground conductive members. In an embodiment, the antenna apparatus 001 may include more than two ground conductive members. The radiator 101 is configured to generate two resonances: a first resonance and a second resonance, where a frequency of the first resonance is greater than a frequency of the second resonance. In an embodiment, a center frequency of the first resonance is greater than a center frequency of the second resonance.

In some embodiments, at least one of the first resonance and the second resonance may be used to cover at least one band in low bands (low bands, LBs). The LBs are usually considered to be from 699 MHz to 960 MHz.

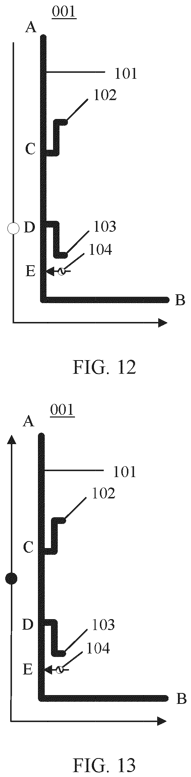

In some embodiments, a difference between the center frequencies of the first resonance and the second resonance is within a range of 100 MHz to 350 MHz. When the frequency difference between the first resonance and the second resonance is excessively small, impact of the first resonance and the second resonance may cause an antenna 001 to generate an efficiency pit. When the frequency difference between the first resonance and the second resonance is excessively large, one of the first resonance and the second resonance may constantly fall out of the band. The following provides specific explanations with reference to embodiments in FIG. 12 and FIG. 13.

An operating mode of the radiator includes a first mode and a second mode. The first resonance is generated in the first mode, and the second resonance is generated in the second mode.

FIG. 12 is a current diagram of the antenna apparatus shown in FIG. 11 in the first mode. As shown in FIG. 12, in some embodiments of this application, the first mode is a half mode, which is also referred to as a half-wavelength mode, or a λ/2 mode, or a 1/2 λ mode (half-wavelength mode, or λ/2 mode, or 1/2 λ mode). Usually, an antenna operating in the half-wavelength mode may be referred to as a half-wavelength antenna. In an embodiment, the first mode is used to generate a resonance of a first wavelength. The resonance of the first wavelength is the first resonance.

At a phase, current distribution in the half mode is shown by arrows in FIG. 12. Currents separately flow from the first end A of the radiator 1001 to the second end B. At the first end A and the second end B, current amplitudes are the smallest (for example, current nodes) and currents are in a same direction. In the middle of an electrical length from the first end A to the second end B, a current amplitude is the largest (for example, a current antinode, as shown by a circle in FIG. 12) and currents are in a same direction. In an embodiment, FIG. 12 shows current distribution at a phase of 0°. It should be understood that, at another phase (for example, a phase of 180°), a current direction is opposite to that in FIG. 12. To be specific, currents flow from the second end B of the radiator 1001 to the first end A. At the first end A and the second end B, current amplitudes are the smallest (for example, current nodes) and currents are in a same direction. In the middle of the electrical length from the first end A to the second end B, a current amplitude is the largest (for example, a current antinode) and currents are in a same direction.

In an embodiment, the first ground conductive member 102 is a single conductive member. One end of the single conductive member is connected to the radiator 101, and the other end of the single conductive member is connected to a ground plane. The "single conductive member" in this application should be understood as an integrated conductive member. The single conductive member may be integrally formed with a bezel and/or a ground plane, or may be a single that can be physically separated from a bezel and a ground plane. The single may be a straight strip-shaped, bent strip-shaped, arc-shaped, or irregularly shaped conductive body.

The single conductive member has an equivalent center, and the equivalent center may be understood as a physical center of the single conductive member. When the conductor, namely, the single conductive member, is a straight strip-shaped, bent strip-shaped, arc-shaped, or irregularly shaped conductive body, the physical center of the conductor may be the middle (or a middle position) of the conductor in an extension direction.

In an embodiment, a distance D1 between an equivalent center of the first ground conductive member 102 and the first end A of the radiator 101 along the first ground conductive member 102 and the radiator 101 via a connection point C of the first ground conductive member 102 and the radiator 101 is less than 1/4 of the first wavelength. The distance D1 may also be briefly referred to as a distance between the equivalent center of the first ground conductive member 102 and the first end A of the radiator 101. In an embodiment, a ground position and a length of the first ground conductive member 102 are set, so that the first ground conductive member 102 can be configured to debug a base-state position of the first mode.

In an embodiment, positions of the equivalent center and a physical center of the first ground conductive member 102 are the same.

In an embodiment, a position within a range less than 1/4 of the first wavelength away from the first end A deviates from a current strong point of the half mode. The first ground conductive member 102 disposed within this range may be configured to adjust a base-state resonance frequency of the half mode.

It should be understood that the "base-state position" or the "base-state resonance frequency" is a frequency range or a resonance frequency corresponding to a resonance, with a lowest frequency, generated by a segment of a radiator or by a radiator in a mode. A "Higher order" or a "higher-order mode" corresponds to a "base state". Unless otherwise specified, the "resonance" in embodiments of this application means a "base-state resonance".

In some embodiments of this application, the distance D1 between the equivalent center of the first ground conductive member 102 and the first end A of the radiator 101 may be 1/8 of the first wavelength to 1/4 of the first wavelength. In an embodiment, bezel widths of different bezel areas of the electronic device are similar. For example, a difference is less than or equal to 1 mm. In this case, the connection point C is within a range of 1/4 L (the total length of the radiator 101 is L) away from a physical center between the first end A and the second end B of the radiator. In an embodiment, bezel widths of different bezel areas of the electronic device are different. For example, a side bezel is narrower than a bottom bezel, and a difference is greater than 1 mm. In this case, the connection point C is correspondingly offset or deviates from the foregoing range.

In an embodiment, a distance between the first end A of the radiator 101 and the connection point C of the first ground conductive member 102 and the radiator 101 is 1/4 to 1/2 of the total length of the radiator 101.

In an embodiment, a distance D2 between an equivalent center of the second ground conductive member 103 and the first end A or the second end B of the radiator 101 along the second ground conductive member and the radiator via a connection point D of the second ground conductive member 103 and the radiator 101 is within a range of 1/4±1/16 of the first wavelength. The distance D2 may also be referred to as a distance between the equivalent center of the second ground conductive member 103 and the first end A or the second end B of the radiator 101. In an embodiment, a ground position and a length of the second ground conductive member 103 are set, so that the second ground conductive member 103 basically does not affect the base-state position of the first mode.

In an embodiment, positions of the equivalent center and a physical center of the second ground conductive member 103 are the same.

In an embodiment, a distance between the first end A of the radiator 101 and the connection point D of the second ground conductive member 103 and the radiator 101 is 1/4 to 1/2 of the total length of the radiator 101.

In an embodiment, a position within a range of 1/4±1/16 of the first wavelength away from the first end A and/or the second end B is close to the current strong point of the half mode. The ground conductive member 103 disposed within this range may basically not affect the base-state resonance frequency of the half mode.

In an embodiment, the bezel widths of the different bezel areas of the electronic device are similar. For example, the difference is less than or equal to 1 mm. In this case, the connection point D is within ±5 mm of the physical center between the first end A and the second end B of the radiator. In an embodiment, the bezel widths of the different bezel areas of the electronic device are different. For example, the side bezel is narrower than the bottom bezel, and the difference is greater than 1 mm. In this case, the connection point D is correspondingly offset or deviates from the foregoing range.

In an embodiment, a width difference between the side bezel and the bottom bezel of the electronic device is less than or equal to 1 mm, and the connection point D of the second ground conductive member 103 and the radiator 101 is disposed within a range of 5 mm, toward the second end B, away from the physical center of the radiator.

In an embodiment, the first ground conductive member 102 may further play a role of a distributed inductor in the antenna apparatus 001. The first ground conductive member 102 is disposed, so that impedance at the first end A of the radiator 101 can be reduced. In addition, an electrical length of the first ground conductive member 102 is adjusted, so that an equivalent inductance of the first ground conductive member 102 can be adjusted, and current distribution on the radiator 101 is more even. In this case, a position of the half mode is adjusted, to avoid uneven current distribution on the antenna apparatus caused by no current or an excessively small current at the first end A of the radiator 101 in the half mode.

In some embodiments of this application, a size of the first ground conductive member 102 ranges from 4 mm to 15 mm. For example, the size of the first ground conductive member 102 is from 8 mm to 12 mm.

It should be understood that a value range in this application should be understood as including two end values.

FIG. 13 is a current diagram of the antenna apparatus shown in FIG. 11 in a second mode. As shown in FIG. 13, the second mode is a quarter mode, which is also referred to as a common-mode (Common-mode, C mode). A resonance of a second wavelength may be generated in the second mode. A resonance frequency corresponding to the second wavelength is a second resonance frequency.

At a phase (phase), current distribution in the quarter mode is shown by arrows in FIG. 13. Currents separately flow from a position between the ground point C and the ground point D to the first end A and the second end B of the radiator 101. At the position between the ground point C and the ground point D, a current amplitude is the smallest (for example, a current node, as shown by a black dot in FIG. 13), and currents on two sides of the position are in opposite directions. At the first end a and the second end b, current amplitudes are the largest (for example, current antinodes). This may also be considered as meeting the current distribution in the quarter mode. In an embodiment, FIG. 13 shows current distribution at a phase of 0°. It should be understood that, at another phase (for example, a phase of 180°), a current direction is opposite to that in FIG. 13. To be specific, currents separately flow from the first end A and the second end B of the radiator 1001 to the position between the ground point C and the ground point D. At the position between the ground point C and the ground point D, a current amplitude is the smallest and currents on two sides of the position are in opposite directions.

In an embodiment, the second ground conductive member 103 is a single conductive member. One end of the single conductive member is connected to the radiator 101, and the other end of the single conductive member is connected to a ground plane. The single conductive member may be integrally formed with a bezel, or may be a single that can be physically separated. The single may be a straight strip-shaped, bent strip-shaped, arc-shaped, or irregularly shaped conductive body.

The single conductive member has an equivalent center, and the equivalent center may be understood as a physical center of the single conductive member. When the conductor, namely, the single conductive member, is a straight strip-shaped, bent strip-shaped, arc-shaped, or irregularly shaped conductive body, the physical center of the conductor may be the middle (position) of the conductor in an extension direction.

The connection point D of the second ground conductive member 103 and the radiator 101 is located between the feed point E and the connection point C of the first ground conductive member 102 and the radiator 101, and the distance D2 between the equivalent center of the second ground conductive member 103 and the second endpoint B is less than 1/4 of the second wavelength.

In an embodiment, a distance between the feed point E and the connection point D of the second ground conductive member 103 and the radiator 101 is greater than 2 mm. For example, the distance between the feed point E and the connection point D of the second ground conductive member 103 and the radiator 101 is greater than 5 mm.

A distance between the equivalent center of the second continuous rib 103 and the feed point E is greater than the distance between the feed point E and the second end B, to cooperate with a first continuous rib 102 to debug a base-state position of the second mode (the quarter mode).

As shown in FIG. 13, a reverse point of quarter-mode currents is located between the connection point D of the second ground conductive member 103 and the radiator 101 and the connection point C of the first ground conductive member 102 and the radiator 101. In an embodiment, the reverse point of the quarter-mode currents is closer to the connection point C of the first ground conductive member 102 and the radiator 101.

In an embodiment, the second ground conductive member 103 may further play a role of a distributed inductor in the antenna apparatus 001. When a size of the second ground conductive member 103 is adjusted, it is equivalent to changing the distance between the equivalent center of the second ground conductive member 103 and the feed point E, so that an inductance of an equivalent inductor of the second ground conductive member 103 changes. This may be used for electrical length control between the second end B of the radiator 101 and the connection point C of the first ground conductive member 102 and the radiator 101. In this way, current distribution on the radiator 101 is more even, and the quarter mode can be better excited.

In some embodiments of this application, the distance D2 between the equivalent center of the second ground conductive member 103 and the second end B of the radiator 101 may be 1/8 of the second wavelength to 1/4 of the second wavelength.

In some embodiments of this application, a length of the first ground conductive member 102 and/or a length of the second ground conductive member 103 range/ranges from 2 mm to 15 mm. For example, the lengths of both the first ground conductive member 102 and the second ground conductive member 103 are within a range of 4 mm to 12 mm. In an embodiment, when both the first ground conductive member 102 and the second ground conductive member 103 are single conductive bodies, the length of the second ground conductive member 103 ranges from, for example, 7 mm to 10 mm. In an embodiment, the sizes of the second ground conductive member 103 and the first ground conductive member 102 are close, and a size difference between the second ground conductive member 103 and the first ground conductive member 102 is less than 4 mm, for example, less than 2 mm. When the sizes of the second ground conductive member 103 and the first ground conductive member 102 are close, the currents distributed on the radiator are more even. For example, quarter-mode currents at the bottom (which are mainly generated by a part between the second end B of the radiator and the ground point D) can flow more to the first end A of the radiator, so that more ground plane currents are drawn by using an upper part of the radiator (which is mainly a part between the first end A of the radiator and the ground point C).

Both the first ground conductive member 102 and the second ground conductive member 103 may be configured to debug the quarter mode. For a debugging manner of the first ground conductive member 102, refer to the debugging manner of the second ground conductive member. Details are not described herein.

Equivalent inductance values of the first ground conductive member 102 and the second ground conductive member 103 range from 1.5 nH to 4 nH.

The sizes of the first ground conductive member 102 and the second ground conductive member 103 are adjusted, so that both the quarter mode and the half mode may be debugged, and a debugging freedom degree is high. Performance of free-space and hand-model antennas can be flexibly optimized.

The quarter mode may be used as a main mode of the antenna. A distance between the first end A of the radiator 101 and the second end B of the radiator 101, namely, the total length L of the radiator, should be greater than 1/2 of the second wavelength and less than 3/4 of the second wavelength.

In an embodiment, a distance between the connection point D of the second ground conductive member 103 and the radiator 101 and the connection point C of the first ground conductive member 102 and the radiator 101 is less than 1/4 of the second wavelength. A distance dAC between the first end A of the radiator 101 and the connection point C of the first ground conductive member 102 and the radiator 101, and a distance dBD between the second end B of the radiator 101 and the connection point D of the second ground conductive member 103 and the radiator 101 are greater than twice the distance dCD between the connection point D of the second ground conductive member 103 and the radiator 101 and the connection point C of the first ground conductive member 102 and the radiator 101. Briefly speaking, as shown in FIG. 11. (dAC+dBD)>2*dCD. In an embodiment, dCD<1/3 L.

In an embodiment, the radiator 101 generates both the quarter mode and the half mode as a whole. In an embodiment, the radiator 101 generates a resonance ① in the quarter mode, and the radiator 101 generates a resonance ② in the half mode. A difference between center frequencies of the resonance ① and the resonance ② is less than or equal to 350 MHz. In an embodiment, the difference between the center frequencies of the resonance ① and the resonance ② is further greater than or equal to 100 MHz.

In an embodiment, the radiator 101 is L-shaped, and is disposed at a corner of the bezel of the electronic device. For example, when the electronic device is held by a hand, the hand easily holds an edge at the corner, or even holds a bezel gap on the edge. Therefore, hand holding can affect an electrical length of the radiator, especially an electrical length in the half mode. As a result, the resonance ② in the half mode generates a frequency offset. Usually, hand holding causes a resonance frequency of the half mode to be approximately 50 MHz to 60 MHz lower. When the difference between the center frequencies of the resonance ① and the resonance ② is less than or equal to 350 MHz, the half mode existing after the frequency offset caused by hand holding is still located near the quarter mode. This may be used to enhance a bandwidth and efficiency of the quarter mode. When the difference between the center frequencies of the resonance ① and the resonance ② is greater than or equal to 100 MHz, an efficiency pit is not generated because the half mode existing after the frequency offset caused by hand holding is excessively close to the quarter mode.

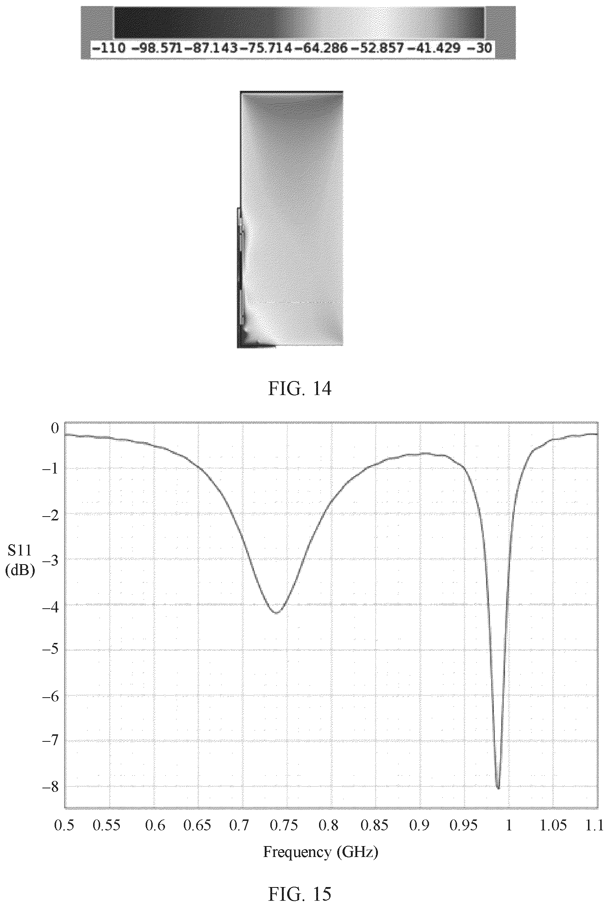

FIG. 14 is a simulation diagram, of a current and a radiation direction, obtained when the antenna apparatus shown in FIG. 11 is in a free space state. From comparison between FIG. 6 and FIG. 14, it can be learned that the antenna apparatus solution shown in FIG. 14 is different from the antenna apparatus solution shown in FIG. 6 in that plane currents are more fully excited, there is no clear cut-off point on the plane currents, and longitudinal current transition is smoother.

FIG. 15 is a curve diagram of a return loss coefficient (S11) of the antenna apparatus shown in FIG. 11 in a free space state. In FIG. 15, a horizontal coordinate indicates a frequency (unit: GHz), and a vertical coordinate indicates a return loss coefficient (unit: dB). A curve indicates the curve diagram, of the return loss coefficient of the antenna apparatus 001, obtained when the electronic device 01 is in the free space state.

From comparison between FIG. 7 and FIG. 15, it can be learned that the antenna apparatus solution shown in FIG. 14 is different from the antenna apparatus solution shown in FIG. 6 in that return losses of the first resonance (the center frequency is approximately 1 GHz) and the second resonance (the center frequency is approximately 750 MHz) are both optimized (in other words, both reduced) to some extent. A return loss at a first resonance frequency (approximately 1 GHz) is optimized greatly, and radiation efficiency is improved clearly.

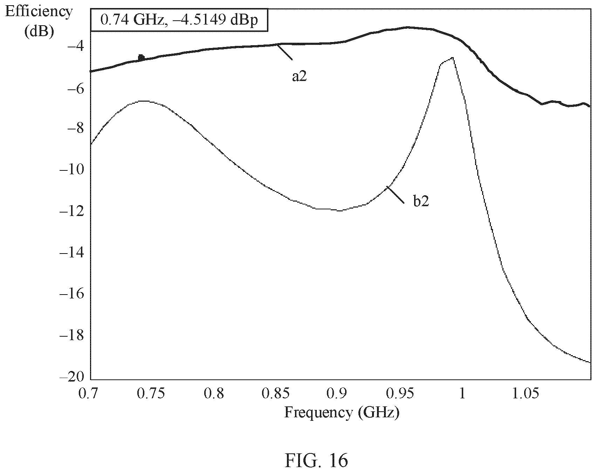

FIG. 16 is a diagram of radiation efficiency of the antenna apparatus 001 shown in FIG. 11.

In FIG. 16, a horizontal coordinate indicates a frequency (unit: GHz), and a vertical coordinate indicates efficiency (unit: dB). A curve in FIG. 16 is a curve, of radiation efficiency of the antenna apparatus 001, obtained when the electronic device 01 is in a free space state. A curve a2 in FIG. 16 is the curve of the radiation efficiency of the antenna apparatus 001, and a curve b2 in FIG. 16 is a curve of system efficiency of the antenna apparatus 001.

From comparison between FIG. 8 and FIG. 16, it can be learned that the antenna apparatus solution shown in FIG. 6 is different from the antenna apparatus solution shown in FIG. 14 in that efficiency at the second resonance frequency (approximately 0.74 GHz) is improved by approximately 1 dB. The antenna apparatus in this application can better excite the plane currents, to improve low frequency performance.

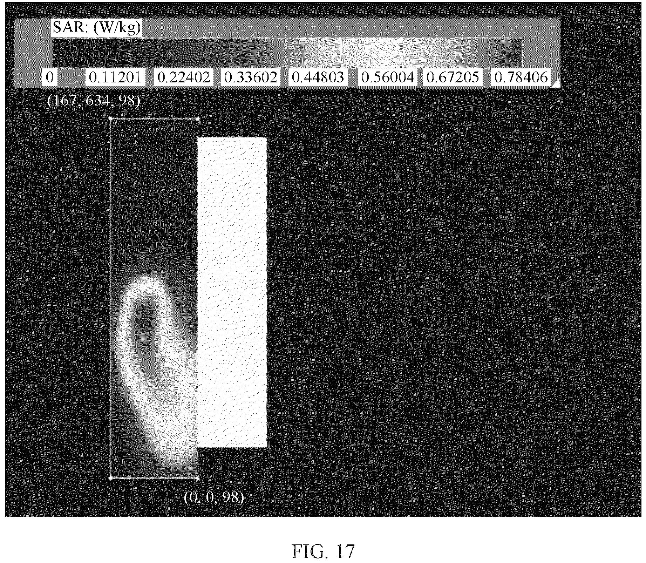

FIG. 17 is a diagram of hot spot scatter of the antenna apparatus 001 shown in FIG. 11. As shown in FIG. 17, a specific absorption rate (Specific Absorption Rate, SAR) of the antenna apparatus 001 is small, and hot spots are more scattered.

The following Table 1 shows hot spot scatter situations on an electronic device disposed with the antenna apparatus provided in embodiments of this application and an electronic device disposed with an antenna apparatus in a related technology.

**Table 1**

| Input power 24 dBm | | Related technology | | Solution of this application | |
|---|---|---|---|---|---|
| | Resonance frequency | 0.78 GHz | 0.81 GHz | 0.78 GHz | 0.81 GHz |
| | Weight of tissue fluid | 10 g | 10 g | 10 g | 10 g |
| | Free space (FS) simulation efficiency | -6.16 | -6.14 | -4.40 | -4.77 |
| | Body efficiency | -18.30 | -18.80 | -17.80 | -18.30 |
| Body SAR | 0 mm BACK | 1.28 | 0.95 | 0.78 | 0.89 |
| | 0 mm side | 0.47 | | 0.76 | |
| Normalized efficiency | | -5 | -5 | -5 | -6 |
| Normalized 5 mm SAR | 0 mm BACK | 1.68 | 1.32 | 0.68 | 0.67 |
| | 0 mm side | 0.61 | 0.00 | 0.66 | 0.00 |

As shown in Table 1, in the antenna apparatus provided in embodiments of this application, the first ground conductive member and the second ground conductive member are disposed, and the size of the ground conductive member is adjusted, to adjust an inductance of the ground conductive member. For example, when the inductance of the ground conductive member increases, the ground plane currents are more scattered, and a longitudinal radiation component of the ground plane currents can be enhanced, to scatter SAR hot spots.

According to the antenna apparatus provided in embodiments of this application, positions of the connection point of the first ground conductive member 102 and the radiator 101 and the connection point of the second ground conductive member 103 and the radiator 101 are adjusted. In this way, dual-mode coverage of the half mode and the quarter mode for an antenna element is implemented, so that the antenna apparatus 001 can generate currents symmetric to the connection point C of the first ground conductive member 102 and the radiator 101 in the quarter mode. In addition, the antenna element can generate asymmetric currents in the half mode. In this way, the antenna element still has good radiation performance when the electronic device is in the free space (free space, FS) state or a head-hand state, and can adapt to a design limit value brought by an environment change, especially impact on low frequency (low band, LB) signal transmission, which helps improve radiation efficiency of the antenna element. In addition, dual-mode coverage helps select a mode, of the antenna element, corresponding to a parameter such as a communication strength, so that the electronic device including the antenna element can meet various communication requirements.

In addition, design of the ground conductive member makes the plane currents scattered. In addition, the size of the ground conductive member may be adjusted, to adjust the inductance of the ground conductive member. For example, when the inductance of the ground conductive member increases, the longitudinal radiation component of the plane currents increases, and the SAR hot spots are scattered.

A manufacturing process of the antenna element is not limited in this application. For example, the antenna element may be manufactured by using a flexible circuit board (flexible printed circuit board, FPC), or may be manufactured by using a laser, or may be manufactured by using a spraying process. A position of the antenna element in the electronic device is not limited in this application either. For example, the antenna element may be manufactured by using a metal bezel of the electronic device such as a mobile phone, or may be disposed by using a printed circuit board of the electronic device, or may be disposed on the printed circuit board of the electronic device by using a support. An antenna form of the antenna element is not limited in this application.

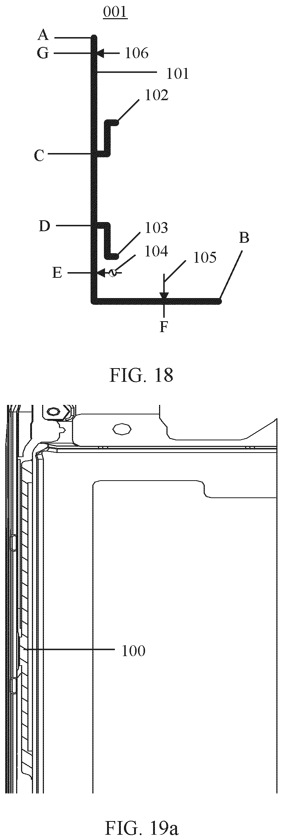

FIG. 18 is a diagram of a structure of another antenna apparatus according to an embodiment of this application. As shown in FIG. 18, in some embodiments of this application, the antenna apparatus 001 further includes a first matching assembly 105. A first end of the first matching assembly 105 is connected to a first connection point F. The first connection point F is located on the radiator 101, and is located between the second end B of the radiator 101 and the feed point E. A second end of the first matching assembly 105 is grounded.

It should be noted that the first connection point F in this application is not an actual point, and a position at which the first matching assembly 105 is connected to the radiator 101 is the first connection point F.

The first matching assembly 105 is disposed, so that an electrical length of the radiator 101 between the second end B of the radiator 101 and the feed point E can be changed. In this way, a same operating mode of the antenna 001 may be switched to different operating bands, and the antenna 001 is also applicable to communication in different operating bands.

In some embodiments, the first matching assembly 105 may include a switch, and different components are grounded through different branches of the switch, to adjust an electrical length of a corresponding part of the radiator 101, so that an operating frequency generated by a resonance of the radiator 101 changes, to help the radiator 101 cover different operating bands.

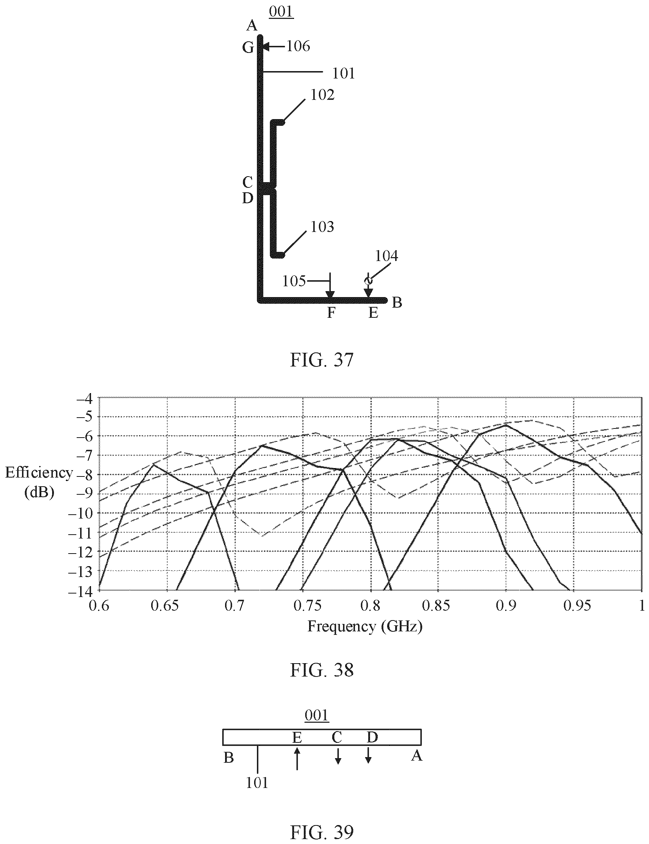

In some other embodiments of this application, as shown in FIG. 37, the antenna apparatus 001 further includes a second matching assembly 106. A first end of the first matching assembly 106 is connected to a second connection point G. The second connection point G is located on the radiator 101, and is located between the first end A of the radiator 101 and the connection point C of the first ground conductive member 102 and the radiator 101. A second end of the second matching assembly 106 is grounded.

It should be noted that the second connection point G in this application is not an actual point, and a position at which the second matching assembly 106 is connected to the radiator 101 is the second connection point G.

The second matching assembly 106 is disposed, so that an electrical length of the radiator between the first end A of the radiator 101 and the feed point E can be changed. In this way, a same operating mode of the antenna 001 may be switched to different operating bands, and the antenna 001 is also applicable to communication in different operating bands.

A structure of the second matching assembly 106 is not limited in embodiments of this application. For the structure of the second matching assembly 106, refer to the descriptions of a structure of the first matching assembly 105. Details are not described herein again.

In an embodiment, the first matching assembly 105 mainly adjusts the quarter mode, and may also adjust the half mode. In the quarter mode or the half mode, when the switch is turned on, a part of the currents on the radiator 101 may flow to the ground plane through the switch (an inductor or a capacitor), and a part of the currents flow to the second end B of the radiator 101 through the first connection point F, so that an F-B branch is connected to the radiator 101.

The second matching assembly 106 mainly adjusts the half mode, and has little impact on the quarter mode. In the half mode, when the second matching assembly 106 is connected, a part of the currents on the radiator 101 may flow to the ground plane through a switch (an inductor or a capacitor), and a part of the currents flow to the first end A of the radiator 101 through the second connection point G, so that a G-A branch is connected to the radiator 101.

A structure of the ground conductive member is not limited in embodiments of this application. In some embodiments of this application, as shown in FIG. 19a, a ground conductive member 100 and the radiator are integrally formed by using a conductive bezel. For example, laser direct structuring (Laser Direct Structuring, LDS) may be used.

In an embodiment, the ground conductive member 100 includes the first ground conductive member and the second ground conductive member, and both the first ground conductive member and the second ground conductive member are integrally formed by using the conductive bezel.

In an embodiment, the middle frame 11 is integrally formed. A metal layer of the middle frame 11 may be used as a ground plane, and the ground conductive member 100 is connected to the ground plane, so that the ground conductive member 100 is grounded.

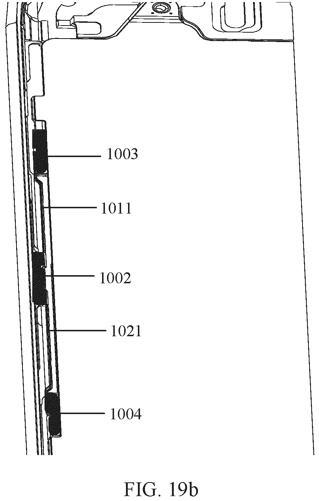

In some other embodiments of this application, as shown in FIG. 19b, the ground conductive member includes a first spring plate 1011 and a second spring plate 1021. The first spring plate 1011 is used as the first ground conductive member 101, and the second spring plate 1021 is used as the second ground conductive member 102.

A first welding spot 1002 is provided on the radiator of the antenna apparatus. A second welding spot 1003 and a third welding spot 1004 are provided on the middle frame of the electronic device. One end of the first spring plate 1011 is connected to the first welding spot 1002, and the other end of the first spring plate 1011 is connected to the second welding spot 1003. One end of the second spring plate 1021 is connected to the first welding spot 1002, and the other end of the second spring plate 1021 is connected to the third welding spot 1004.

Therefore, the ground conductive member is a spring plate, and may be connected to the radiator and the ground plane after the radiator is formed, so that a position of the ground conductive member can be adjusted according to a requirement.

In an embodiment, at least one of the first ground conductive member 102 and the second ground conductive member 103 includes a single conductive member and an inductive member. One end of a spring is connected to the radiator 101, the other end of the spring is connected to the inductive member. The inductive member is connected to the ground plane.

In an embodiment, the single conductive member may be integrally formed with a bezel, or may be a single that can be physically separated. The single may be a straight strip-shaped, bent strip-shaped, arc-shaped, or irregularly shaped conductive body.

The inductive member mentioned in this embodiment of this application may be understood as a lumped inductor and/or a distributed inductor. The lumped inductor is an inductive lumped element, for example, an inductor element. The lumped element is a general term for all elements when a size of the element is far smaller than a wavelength relative to an operating frequency of a circuit. For a signal, an element characteristic is constantly fixed at any time, which is irrelevant to a frequency.

A distributed inductor (or distributed inductor) is an inductor that exists due to wire routing and distribution of components. The ground conductive member may include a distributed inductor, or may include a lumped inductor. This is not limited herein.

The spring and the inductive member are small in size and occupy small space, which is conducive to miniaturization of the device.

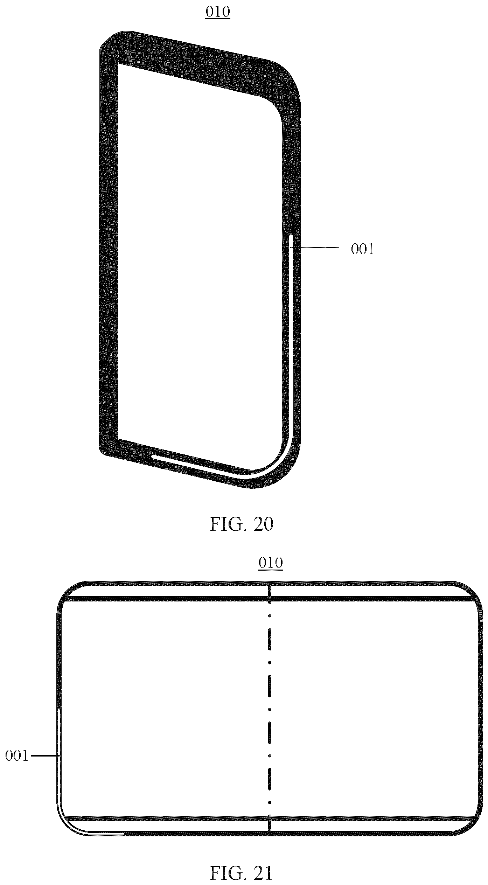

In some other embodiments of this application, the antenna apparatus 001 may be further used in a folded display terminal 010 shown in FIG. 20 and FIG. 21.

A status of the folded display terminal includes a folded state shown in FIG. 20 and an unfolded state shown in FIG. 21.

In some embodiments of this application, to make the folded display terminal 010 thinner and lighter, a thickness of the folded display terminal 010 is continuously reduced. For example, in some scenarios, a thickness of a bezel of the folded display terminal 010 is approximately 3 mm, and low frequency performance deteriorates greatly.

It should be understood that, in this embodiment of this application, the radiator of the antenna apparatus 001 is simply shown by using only a line. Because both ends of the radiator are open ends, when the radiator includes a conductive bezel, both ends of the radiator are formed by using a gap on the conductive bezel; or when the radiator is a conductive strip inside a non-conductive bezel, both ends of the radiator are formed by not electrically connecting to another conductive member.

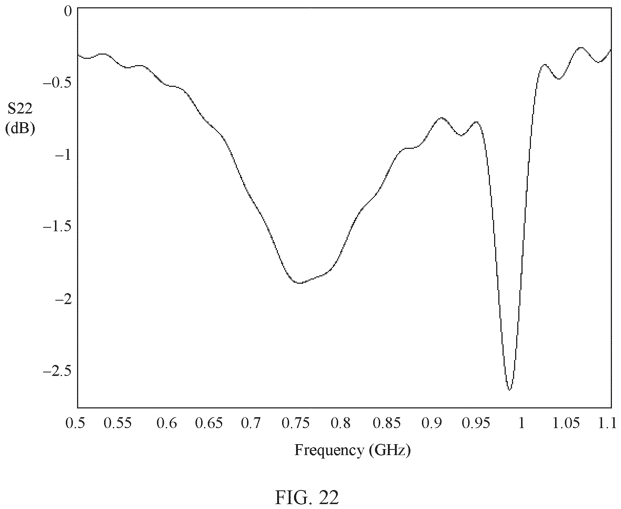

FIG. 22 is a curve diagram, of a return loss coefficient (S22) of the antenna apparatus shown in FIG. 3 in a free space state, obtained when a folded display terminal is in an unfolded state.

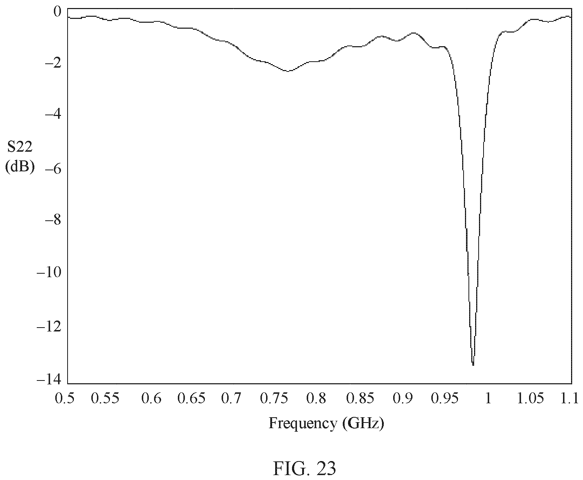

FIG. 23 is a curve diagram, of a return loss coefficient (S22) of the antenna apparatus shown in FIG. 11 in a free space state, obtained when a folded display terminal is in an unfolded state.

From comparison between FIG. 22 and FIG. 23, it can be learned that a return loss of the antenna apparatus in FIG. 11 at the second resonance frequency (approximately 0.78 GHz) is close to a return loss of the antenna apparatus in FIG. 3 at the second resonance frequency (approximately 0.78 GHz).

A return loss of the antenna apparatus in FIG. 11 at the first resonance frequency (approximately 1 GHz) is less than a return loss of the antenna apparatus in FIG. 3 at the first resonance frequency (approximately 1 GHz). A difference between the return loss of the antenna apparatus in FIG. 11 at the first resonance frequency (approximately 1 GHz) and the return loss of the antenna apparatus in FIG. 3 at the first resonance frequency (approximately 1 GHz) is approximately 10 dB.

In the antenna apparatus shown in FIG. 3, the ground conductive member is small in size and fixed in position. In the antenna apparatus shown in FIG. 11, the ground conductive member is long in size and has a large equivalent inductance. Therefore, excitation for a half mode of a side-edge mode is better, the return loss is optimized (in other words, reduced), and radiation performance of an antenna is improved.

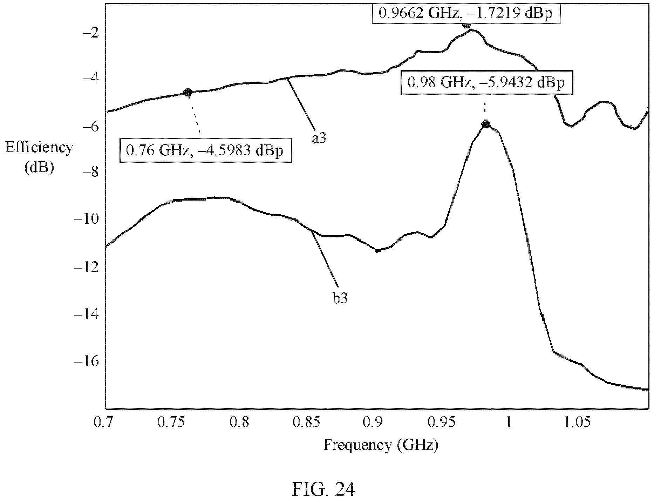

FIG. 24 is a diagram, of radiation efficiency of the antenna apparatus shown in FIG. 3, obtained when a folded display terminal is in an unfolded state. A line a3 in FIG. 24 is a curve, of radiation efficiency of the antenna apparatus shown in FIG. 3, obtained when the folded display terminal is in the unfolded state. A line b3 in FIG. 24 is a curve, of system efficiency of the antenna apparatus shown in FIG. 3, obtained when the folded display terminal is in the unfolded state.

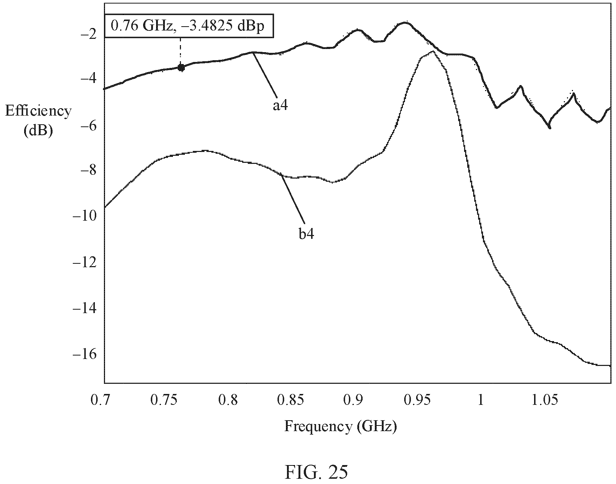

FIG. 25 is a diagram, of radiation efficiency of the antenna apparatus shown in FIG. 11, obtained when a folded display terminal is in an unfolded state. A line a4 in FIG. 25 is a curve, of radiation efficiency of the antenna apparatus shown in FIG. 11, obtained when the folded display terminal is in the unfolded state. A line b4 in FIG. 25 is a curve, of system efficiency of the antenna apparatus shown in FIG. 11, obtained when the folded display terminal is in the unfolded state.

From comparison between FIG. 24 and FIG. 25, it can be learned that the antenna apparatus shown in FIG. 11 may excite more longitudinal currents, to improve the radiation efficiency. From comparison between radiation efficiency of the antenna apparatuses in the half mode (the first resonance frequency), it can be learned that performance is improved by approximately 1 dB.

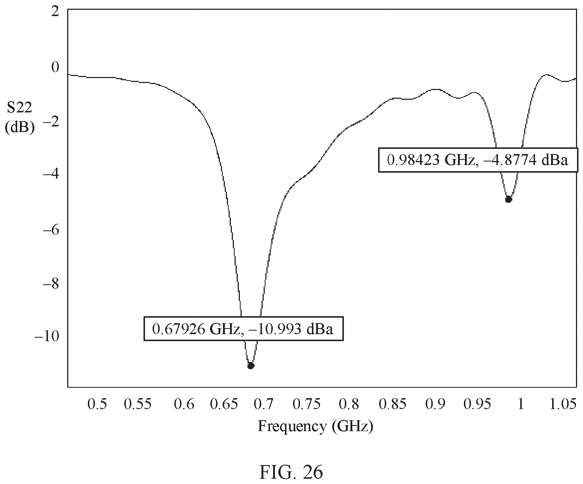

FIG. 26 is a curve diagram, of a return loss coefficient (S22) of the antenna apparatus shown in FIG. 3 in a free space state, obtained when a folded display terminal is in a folded state.

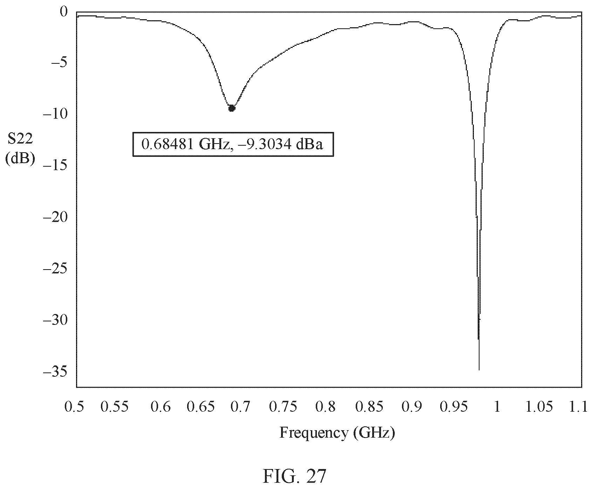

FIG. 27 is a curve diagram, of a return loss coefficient (S22) of the antenna apparatus shown in FIG. 11 in a free space state, obtained when a folded display terminal is in a folded state.

From comparison between FIG. 26 and FIG. 27, it can be learned that a difference between a return loss of the antenna apparatus in FIG. 11 at the second resonance frequency (approximately 0.68 GHz) and a return loss of the antenna apparatus in FIG. 3 at the second resonance frequency (approximately 0.68 GHz) is less than 1 dB.

A return loss of the antenna apparatus in FIG. 11 at the first resonance frequency (approximately 0.98 GHz) is greater than a return loss of the antenna apparatus in FIG. 3 at the first resonance frequency (approximately 0.98 GHz). A difference between the return loss of the antenna apparatus in FIG. 11 at the first resonance frequency (approximately 1 GHz) and the return loss of the antenna apparatus in FIG. 3 at the first resonance frequency (approximately 1 GHz) is approximately 30 dB.

Therefore, the return loss of the antenna apparatus shown in FIG. 11 at the first resonance frequency is smaller, and the return loss of the antenna apparatus shown in FIG. 11 is more optimized when the folded display terminal 010 is in the folded state than when the folded display terminal 010 is in the unfolded state.

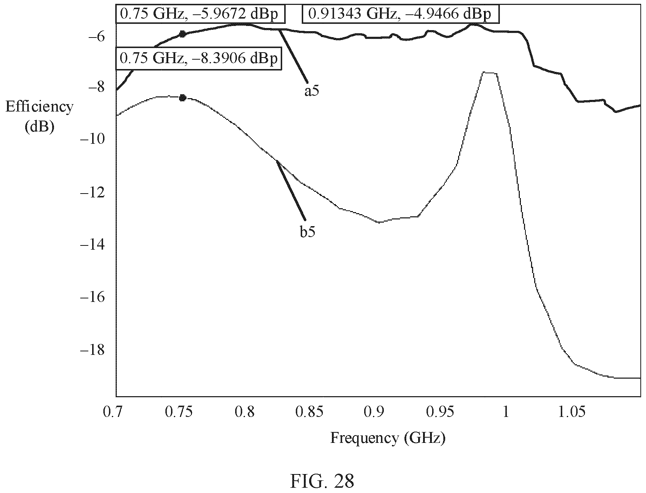

FIG. 28 is a diagram, of radiation efficiency of the antenna apparatus shown in FIG. 3, obtained when a folded display terminal is in a folded state. A line a5 in FIG. 28 is a curve, of radiation efficiency of the antenna apparatus shown in FIG. 3, obtained when the folded display terminal is in the unfolded state. A line b5 in FIG. 28 is a curve, of system efficiency of the antenna apparatus shown in FIG. 3, obtained when the folded display terminal is in the unfolded state.

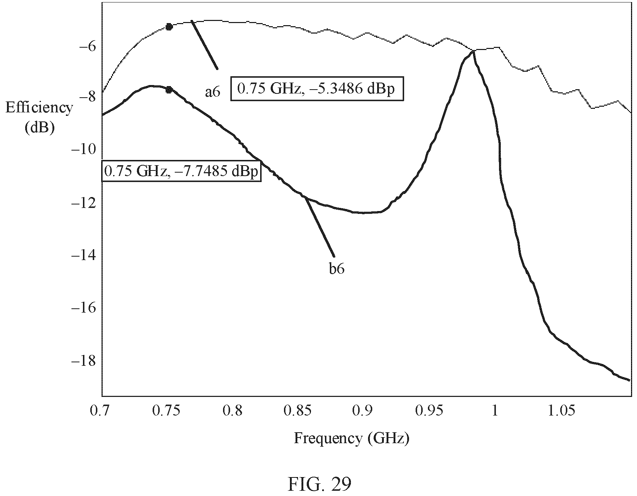

FIG. 29 is a diagram, of radiation efficiency of the antenna apparatus shown in FIG. 11, obtained when a folded display terminal is in a folded state. A line a6 in FIG. 29 is a curve, of radiation efficiency of the antenna apparatus shown in FIG. 11, obtained when the folded display terminal is in the unfolded state. A line b6 in FIG. 29 is a curve, of system efficiency of the antenna apparatus shown in FIG. 11, obtained when the folded display terminal is in the unfolded state.

From comparison between FIG. 28 and FIG. 29, it can be learned that the efficiency of the antenna apparatus shown in FIG. 11 is improved by approximately 0.6 dB. Due to impact of a secondary screen, efficiency improvement is smaller when the folded display terminal 010 is in the folded state than when the folded display terminal 010 is in the unfolded state.

In addition, because the antenna apparatus is usually close to a holding position of a user, it is necessary to test impact of holding of the user on performance of the antenna apparatus.

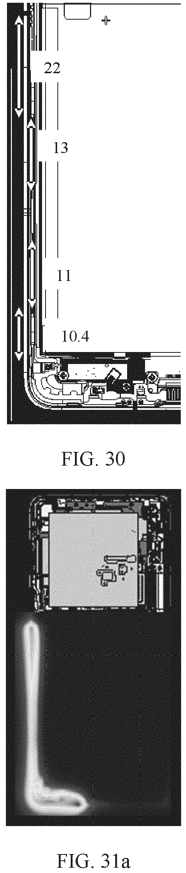

FIG. 30 is a diagram of a position of the antenna apparatus shown in FIG. 11 in an electronic device. A number in FIG. 30 indicates a size of a position indicated by an arrow in a unit of millimeter (mm).

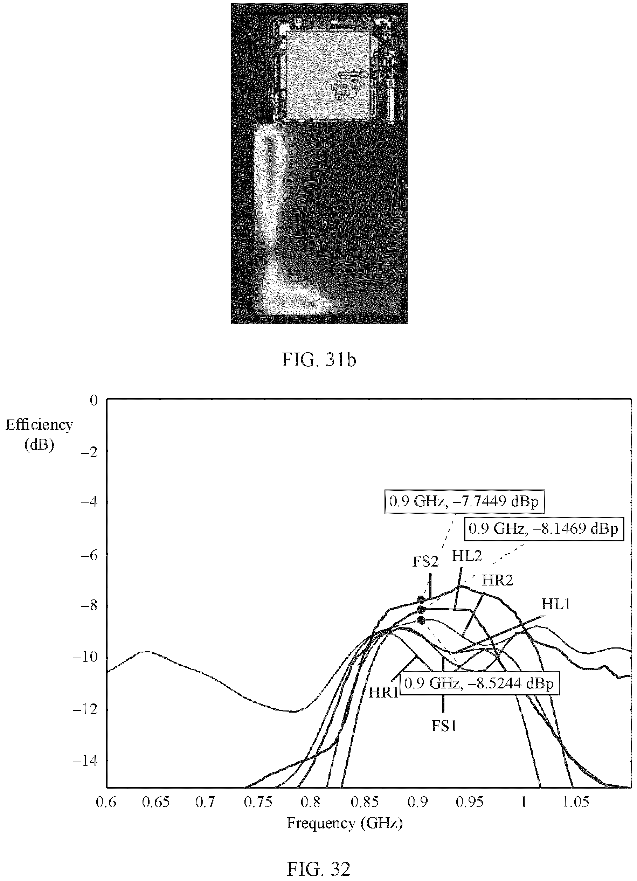

FIG. 31a is an electric field diagram, of an antenna apparatus in a first mode, obtained when an electronic device is in a holding state. FIG. 31b is an electric field diagram, of an antenna apparatus in a second mode, obtained when an electronic device is in a holding state.

As shown in FIG. 31a and FIG. 31b, from a perspective of a radiation electric field, in the second mode, longitudinal current excitation is better, and the radiation field is more uniform.

FIG. 32 is an efficiency curve diagram, of an antenna apparatus, obtained when an electronic device is in a holding state and in a free space state.

A curve FS1 represents a curve of system efficiency of the antenna apparatus in the free space state.

A curve FS2 represents a curve of radiation efficiency of the antenna apparatus in the free space state. When a frequency is 0.9 GHz, the radiation efficiency is -7.744 dB.

A curve HR1 represents a curve of system efficiency of the antenna apparatus in a right-hand state.

A curve HR2 represents a curve of radiation efficiency of the antenna apparatus in the right-hand state. When the frequency is 0.9 GHz, the radiation efficiency is -8.5244 dB. The radiation efficiency in a right-hand mode is different from the radiation efficiency in the free space state in that the radiation efficiency in the right-hand mode is reduced by approximately 0.78 dB.

A curve HL1 represents a curve of system efficiency of the antenna apparatus in a left-hand state.

A curve HL2 represents a curve of radiation efficiency of the antenna apparatus in the left-hand state. When the frequency is 0.9 GHz, the radiation efficiency is -8.1469 dB. The radiation efficiency in a left-hand mode is different from the radiation efficiency in the free space state in that the radiation efficiency in the left-hand mode is reduced by approximately 0.4 dB.

The free space state is a state in which no object approaches the electronic device.

The left-hand state is a state in which a left hand holds the electronic device.

The right-hand state is a state in which a right hand holds the electronic device.

Refer to FIG. 32. The antenna apparatus in the holding state is different from the antenna apparatus in the free space state in that a hand model reduction in an operating band is approximately 0.4 dB to 0.8 dB. Therefore, a plurality of ground conductive members are disposed, so that current distribution on the antenna apparatus is more even, which helps improve radiation efficiency of the antenna apparatus in the holding state.

In some embodiments of this application, the electronic device 01 includes a power (power) button and a volume button. Compared with the volume button, the power button is closer to the bottom of the electronic device 01.

In some embodiments of this application, the first end A of the radiator 101 is located on a side that is of the power button and that is away from the volume button, a position of the first end A of the radiator 101 is closer to the bottom of the electronic device 01, and a distance between the first end A of the radiator 101 and the bottom ranges from approximately 60 mm to 100 mm.

In some other embodiments of this application, the first end A of the radiator 101 is located between the power button and the volume button of the electronic device 01, a position of the first end A of the radiator 101 is closer to the top of the electronic device 01, and a distance between the first end A of the radiator 101 and the bottom ranges from 80 mm to 120 mm.

However, for a design in which the first end A of the radiator 101 is closer to the top of the electronic device 01, a position of the half mode of the radiator 101 is low for a low frequency.

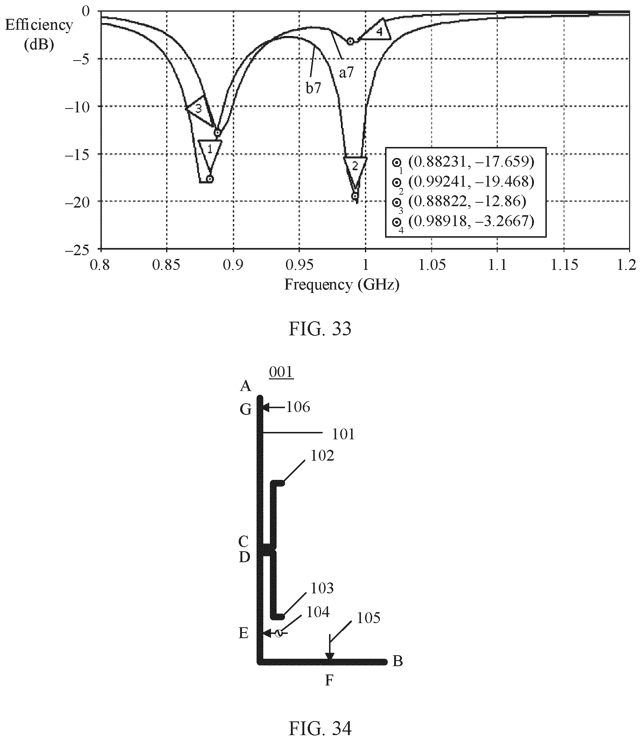

FIG. 33 is an efficiency curve diagram, of the antenna apparatus shown in FIG. 3, obtained when a height of the antenna apparatus is 90 mm. A point 1, a point 2, a point 3, and a point 4 in FIG. 33 are efficiency pits. A line a7 in FIG. 33 is a curve, of radiation efficiency of the antenna apparatus shown in FIG. 3, obtained when the height of the antenna apparatus is 90 mm. A line b7 in FIG. 33 is a curve, of system efficiency of the antenna apparatus shown in FIG. 3, obtained when the height of the antenna apparatus is 90 mm.

The antenna apparatus shown in FIG. 3 has a high requirement on the feed point, a switch switching position, and a value, and is not free to be debugged. In addition, a phenomenon that a radiation efficiency pit in the half mode moves forward is prone to occurring.

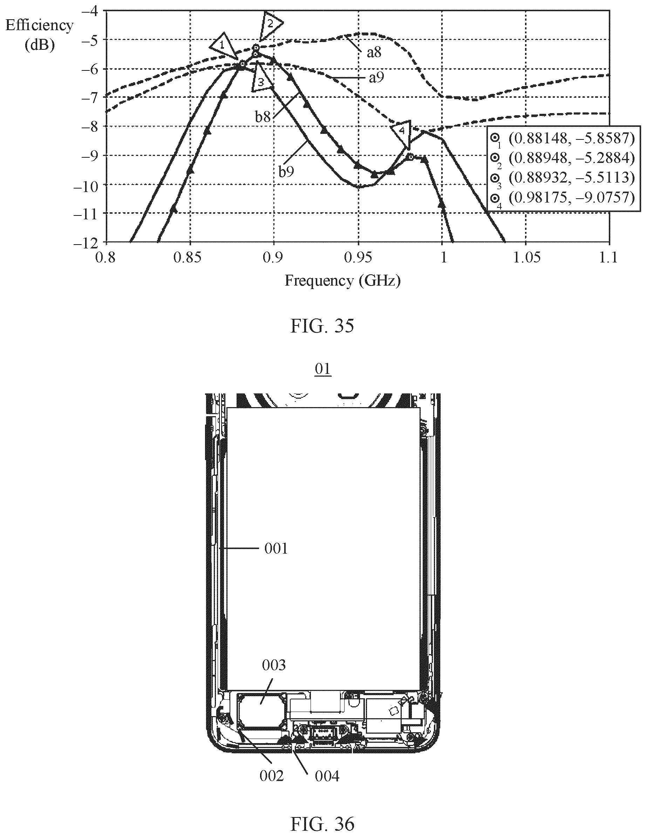

FIG. 34 is a diagram of a structure of another antenna apparatus according to an embodiment of this application. FIG. 35 is an efficiency curve diagram obtained when a height of an antenna apparatus is 110 mm. A line a8 in FIG. 35 is a curve, of radiation efficiency of the antenna apparatus shown in FIG. 34, obtained when the height of the antenna apparatus is 110 mm. A line b8 in FIG. 35 is a curve, of system efficiency of the antenna apparatus shown in FIG. 34, obtained when the height of the antenna apparatus is 110 mm.

A line a9 in FIG. 35 is a curve, of radiation efficiency of the antenna apparatus shown in FIG. 3, obtained when the height of the antenna apparatus is 110 mm. A line b9 in FIG. 35 is a curve, of system efficiency of the antenna apparatus shown in FIG. 3, obtained when the height of the antenna apparatus is 110 mm.

As shown in FIG. 33, FIG. 34, and FIG. 35, a ground conductive member solution can better optimize positions of the quarter mode and the half mode, and reduce impact of an excessively long size on antenna performance.

It can be learned that a gain of 0.6 dB can be obtained by adding a debugging freedom degree in the ground conductive member solution.

In some embodiments of this application, as shown in FIG. 36, a sound cavity 003 and a feed sub-board 002 are disposed at the bottom of the electronic device 01, and the sound cavity 003 is adjacent to the feed sub-board 002.

In some embodiments of this application, a size of the sound cavity 003 is increased, and the feed sub-board 002 is removed. The antenna apparatus 001 may be fed only near a slot 004 at the bottom of the electronic device 01, and the first end A of the radiator 101 is 110 mm away from the bottom.

In the foregoing architecture, when the antenna apparatus shown in FIG. 3 is used, for a ground conductive member solution in which feeding is performed at an end, a size is excessively long, a resonance is low, and free switching cannot be performed between N71 and B8 (N71, N28, B12, B20, B5, B8).

FIG. 37 is a diagram of a structure of another antenna apparatus according to an embodiment of this application. As shown in FIG. 37, the antenna apparatus 001 uses a ground conductive member structure. Positions and inductance magnitudes (lengths of the ground conductive members) of the two ground conductive members are adjusted, so that positions of the quarter mode and the half mode can be effectively adjusted.

FIG. 38 is an efficiency curve diagram of the antenna apparatus shown in FIG. 37. As shown in FIG. 38, the two ground conductive members are disposed, so that an electrical length of the low quarter mode can be adjusted. In this way, when feeding is performed at an end of the antenna apparatus, the quarter mode and the half mode are simultaneously switched and covered, and a plurality of bands (N71, N28, B12, B20, B5 and B8) from N71 to B8 are covered.

A capacitor may be connected in series between a feeding structure and the antenna apparatus 001, and a capacitance value ranges from 0.75 Pf to 1.5 Pf.

A structure of the antenna apparatus is not limited in embodiments of this application. In some embodiments, the antenna apparatus may be of an L-shaped structure shown in FIG. 11. In some other embodiments of this application, the antenna apparatus 001 may alternatively use a transverse line-shaped antenna shown in FIG. 39. The antenna element includes two feed points and two ground conductive members, and the two ground conductive members are located between the two feed points.

As shown in FIG. 39, the antenna apparatus 001 includes a radiator 101, and the radiator 101 includes a first end A and a second end B that are opposite to each other. Both the first end A and the second end B are open ends. In an embodiment, a distance dAE between a feed point E on the radiator 101 and the first end A is greater than a distance dBE between the feed point E and the second end B. A first ground point C and a second ground point D are disposed between the feed point E and the first end A. For a structure and performance of the antenna apparatus 001, refer to the descriptions of the antenna apparatus 001 shown in FIG. 11. Details are not described herein again.

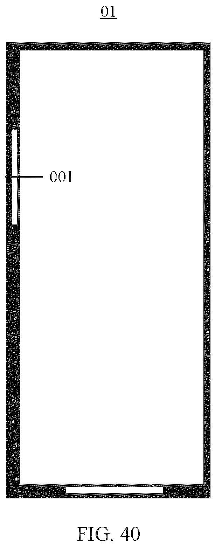

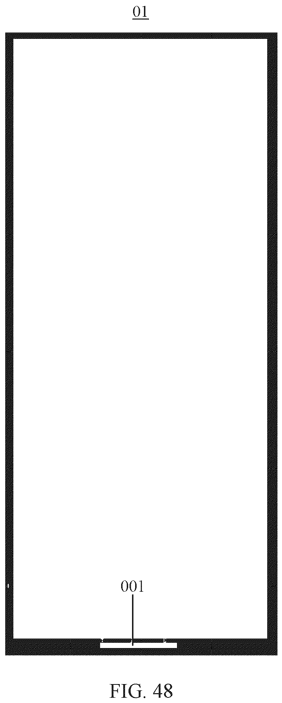

A disposition position of the antenna apparatus shown in FIG. 39 is not limited in embodiments of this application. For example, in some embodiments of this application, the antenna apparatus may be disposed on a side bezel of the electronic device 01, as shown in FIG. 40. In some other embodiments of this application, the antenna apparatus may alternatively be disposed on a bottom bezel of the electronic device 01, as shown in FIG. 48.

FIG. 40 is a diagram of a structure of still another antenna apparatus according to an embodiment of this application. As shown in FIG. 40, in some embodiments, the antenna apparatus 001 is disposed on a side edge of the electronic device 01.

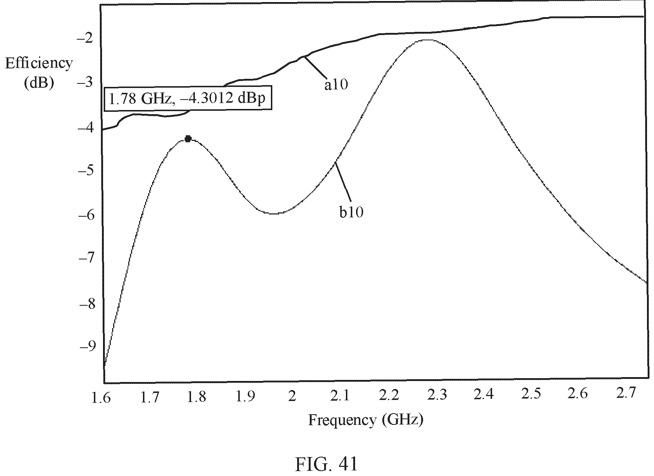

FIG. 41 is an efficiency curve diagram of an antenna apparatus, with a ground conductive member, disposed on a side bezel of an electronic device. A line a10 in FIG. 41 is a curve of radiation efficiency of the antenna apparatus, with the ground conductive member, disposed on the side bezel of the electronic device. A line b10 in FIG. 41 is a curve of system efficiency of the antenna apparatus, with the ground conductive member, disposed on the side bezel of the electronic device.

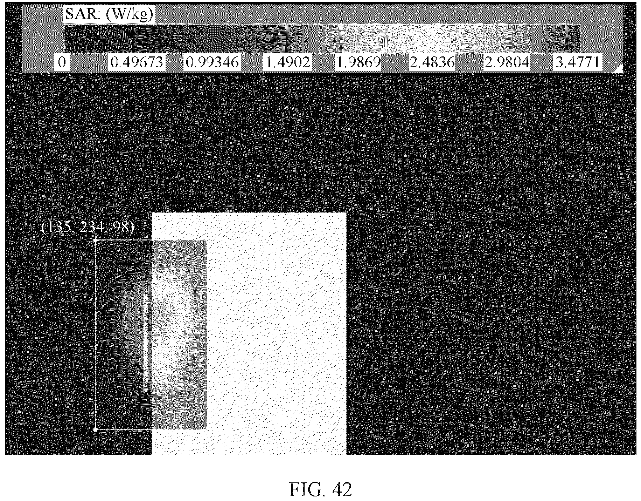

FIG. 42 is a diagram of hot spot scatter of an antenna apparatus, with a ground conductive member, disposed on a side bezel of an electronic device. As shown in FIG. 42, with the antenna apparatus as a center, a specific absorption rate SAR gradually decreases outward.

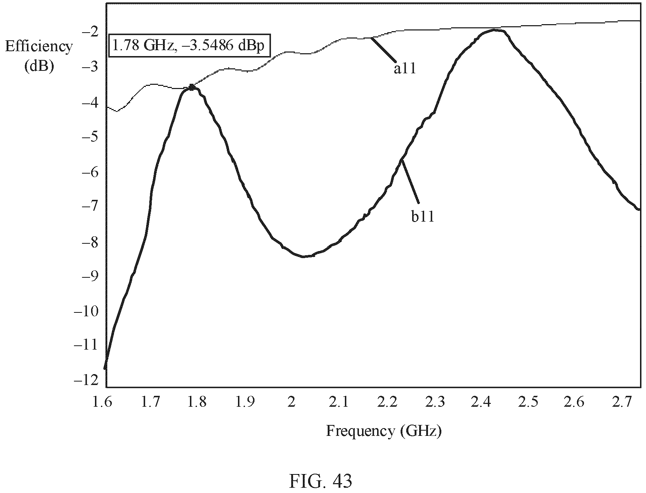

FIG. 43 is an efficiency curve diagram of an antenna apparatus, with a ground conductive member, disposed on a side bezel of an electronic device. A line a11 in FIG. 43 is a curve of radiation efficiency of the antenna apparatus, with the ground conductive member, disposed on the side bezel of the electronic device. A line b11 in FIG. 43 is a curve of system efficiency of the antenna apparatus, with the ground conductive member, disposed on the side bezel of the electronic device.

From comparison between FIG. 41 and FIG. 43, it can be learned that, compared with the ground conductive member solution, the antenna apparatus with the ground conductive member has higher radiation efficiency, which is improved by 0.8 dB.

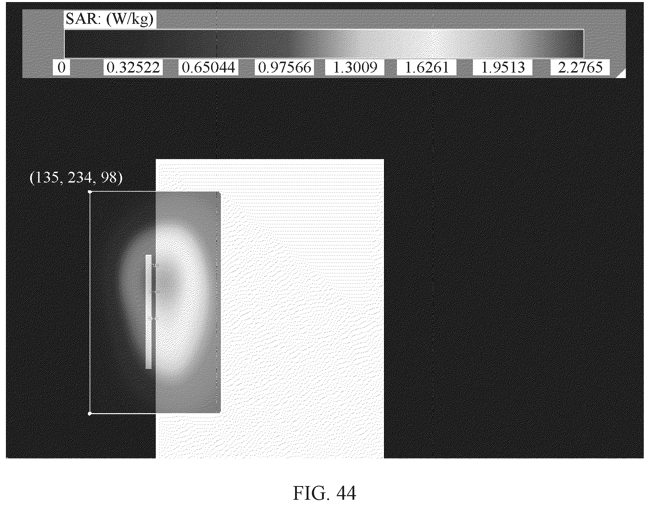

FIG. 44 is a diagram of hot spot scatter of an antenna apparatus, with a ground conductive member, disposed on a side bezel of an electronic device.

From comparison between FIG. 42 and FIG. 44, it can be learned that, the ground conductive member solution is different from the antenna apparatus with the ground conductive member in that specific absorption rate SAR hot spots of the antenna apparatus with the ground conductive member are more scattered, which reduces impact on a human body.

The following Table 2 shows hot spot scatter situations on an electronic device disposed with the antenna apparatus provided in embodiments of this application and an electronic device disposed with an antenna apparatus in a related technology.

**Table 2**

| Input power 24 dBm | | Related technology | Solution of this application | Input power 24 dBm | |
|---|---|---|---|---|---|
| | Resonance frequency | 1.8 GHz | 1.8 GHz | | Resonance frequency |
| | Weight of tissue fluid | 1 g | 10 g | 1 g | 10 g |
| | Free space (FS) simulation efficiency | | -4.30 | | -3.50 |
| Body SAR | 0 mm BACK | | 3.48 | | 2.28 |
| | 0 mm side | | 2.88 | | 1.83 |
| Normalized efficiency | | -5 | -5 | -5 | -5 |
| Normalized 5 mm body SAR | 0 mm BACK | 0.00 | 2.96 | 0.00 | 1.61 |
| | 0 mm side | 0.00 | 2.45 | 0.00 | 1.29 |

Refer to Table 2. The electronic device disposed with the antenna apparatus provided in embodiments of this application is different from the electronic device disposed with the antenna apparatus in the related technology in that the normalized SAR is increased by 2 dB.

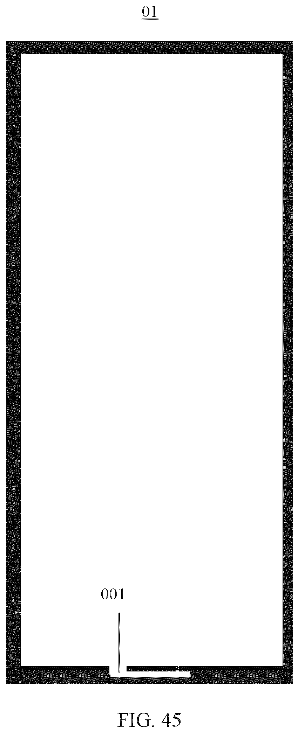

FIG. 45 is a diagram of a structure of still another antenna apparatus according to a related technology. As shown in FIG. 45, in some embodiments, the antenna apparatus 001 is disposed at the bottom of the electronic device 01. In some embodiments of this application, a ground conductive member may be replaced with an equivalent inductive element.

The antenna apparatus 001 provided in the related technology is shown in FIG. 45, and uses single thick grounding.

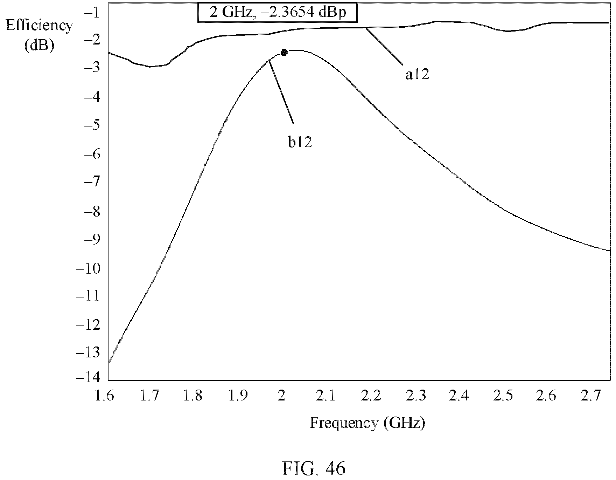

FIG. 46 is an efficiency curve diagram of the antenna apparatus shown in FIG. 45. A line a12 in FIG. 46 is a curve of radiation efficiency of the antenna apparatus shown in FIG. 45. A line b12 in FIG. 46 is a curve of system efficiency of the antenna apparatus shown in FIG. 45.

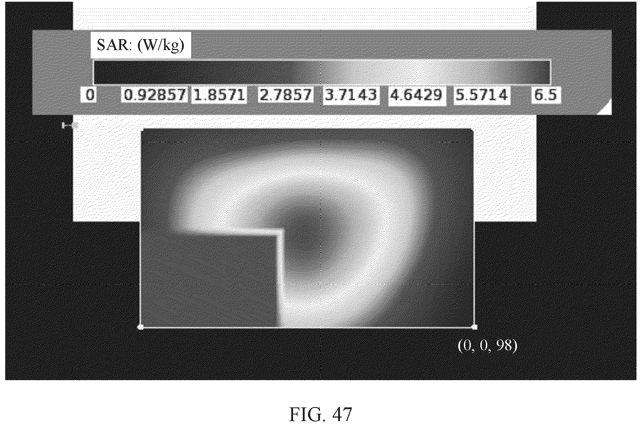

FIG. 47 is a diagram of hot spot scatter of the antenna apparatus shown in FIG. 45.

FIG. 48 is a diagram of a structure of still another antenna apparatus according to an embodiment of this application. As shown in FIG. 48, the antenna apparatus 001 uses a structure of two ground conductive members, to implement single-mode dual-grounding.

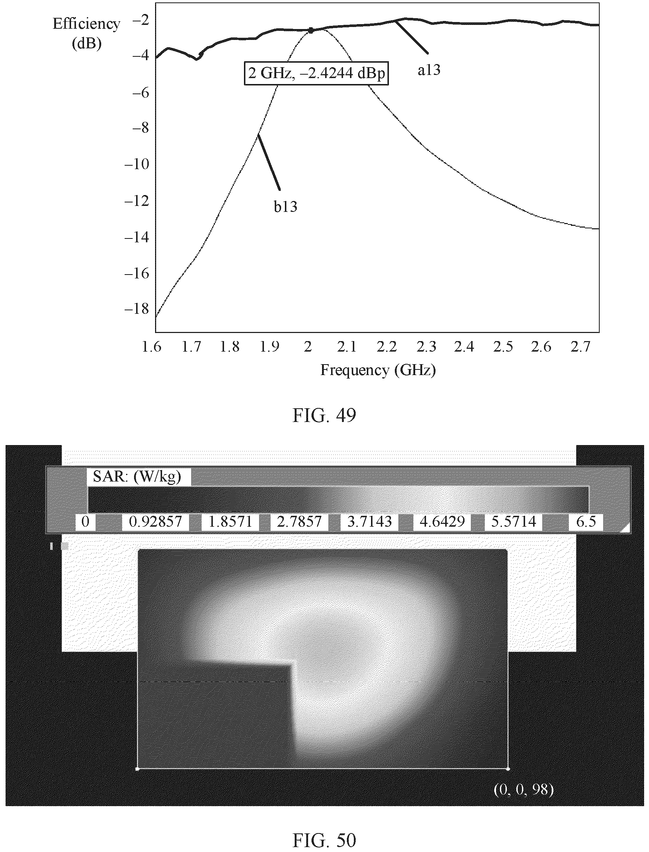

FIG. 49 is an efficiency curve diagram of the antenna apparatus shown in FIG. 48. A line a13 in FIG. 49 is a curve of radiation efficiency of the antenna apparatus shown in FIG. 48. A line b13 in FIG. 49 is a curve of system efficiency of the antenna apparatus shown in FIG. 48.

FIG. 50 is a diagram of hot spot scatter of the antenna apparatus shown in FIG. 48.

From comparison between FIG. 49 and FIG. 46, it can be learned that, compared with the ground conductive member solution, the antenna apparatus with the ground conductive member has higher radiation efficiency, which is improved by approximately 0.06 dB.

From comparison between FIG. 50 and FIG. 47, it can be learned that, the ground conductive member solution is different from the antenna apparatus with the ground conductive member in that specific absorption rate SAR hot spots of the antenna apparatus with the ground conductive member are more scattered, which reduces impact on a human body.

The following Table 3 shows hot spot scatter situations on an electronic device disposed with the antenna apparatus provided in embodiments of this application and an electronic device disposed with an antenna apparatus in a related technology.

**Table 3**

| Input power 24 dBm | | Related technology | | Solution of this application | |
|---|---|---|---|---|---|
| | Resonance frequency | 2 GHz | | 2 GHz | |
| | Weight of tissue fluid | 1 g | 10 g | 1 g | 10 g |
| | Free space (FS) simulation efficiency | | -2.36 | | -2.40 |
| | Body efficiency | | | | -18.30 |
| Body SAR | 5 mm BACK | | | | |
| | 5 mm side | | 2.94 | | 2.48 |
| | 0 mm side | | 6.90 | | 5.39 |
| Normalized efficiency | | -5 | -5 | -5 | -5 |
| Normalized 5 mm body SAR | 5 mm BACK | 0.00 | 0.00 | 0.00 | 0.00 |
| | 5 mm side | 0.00 | 1.60 | 0.00 | 1.36 |
| | 0 mm BACK | 0.00 | 0.00 | 0.00 | 0.67 |
| | 0 mm side | 0.00 | 3.75 | 0.00 | 2.96 |

Refer to Table 3. The electronic device disposed with the antenna apparatus provided in embodiments of this application is different from the electronic device disposed with the antenna apparatus in the related technology in that the normalized SAR is increased by 1 dB.

In the foregoing embodiment, the antenna apparatus may be in an L-shaped design and a transverse line-shaped design.

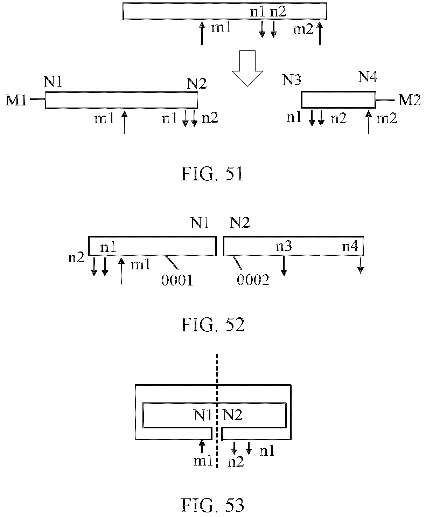

In some other embodiments of this application, the antenna apparatus may further use a left-hand antenna shown in FIG. 51. The antenna element includes two feed points: a first feed point m1 and a second feed point m2, and includes two ground conductive members: a first ground conductive member n1 and a second ground conductive member n2. The two feed points are spaced apart. The two ground conductive members are located between the two feed points. An operating mode of the antenna element includes a first quarter mode and a second quarter mode.

The antenna in FIG. 51 may be equivalent to two antennas: a first antenna M1 and a second antenna M2.

The first antenna M1 includes a first end N1 and a second end N2 that are opposite to each other, and the first feed point m1, the first ground conductive member n1, and the second ground conductive member n2 that are disposed on a radiator of the first antenna M1. An operating mode of the first antenna M1 is the first quarter mode. The first ground conductive member n1 and the second ground conductive member n2 are located on a same side of the first feed point m1. A distance between an equivalent center of the first ground conductive member n1 and the first end N1 of the first antenna M1 is less than 1/4 wavelength. A distance between an equivalent center of the second ground conductive member n2 and the first end N1 of the first antenna M1 is greater than 1/4 wavelength and less than 1/2 wavelength. An equivalent inductance of the ground conductive member is greater than 1 nH.

The second antenna M2 includes a first end N3 and a second end N4 that are opposite to each other, and the second feed point m2, the first ground conductive member n1, and the second ground conductive member n2 that are disposed on a radiator of the second antenna M2. An operating mode of the second antenna M2 is the second quarter mode. The first ground conductive member n1 and the second ground conductive member n2 are located on a same side of the second feed point m2. A distance between the equivalent center of the second ground conductive member n2 and the second end N4 of the second antenna M2 is less than 1/8 wavelength. A distance between the equivalent center of the first ground conductive member n1 and the second end N4 of the second antenna M2 is greater than 1/8 wavelength and less than 1/4 wavelength.

In some other embodiments of this application, the antenna apparatus may alternatively use an open slot antenna shown in FIG. 52, including a main radiator 0001 and a parasitic radiator 0002. The parasitic radiator 0002 is coupled to the main radiator 0001. The main radiator 0001 is connected to a first ground conductive member n1 and a second ground conductive member n2. The parasitic radiator 0002 is connected to a third ground conductive member n3 and a fourth ground conductive member n4, and a feed point m1 is disposed on the main radiator.

The open slot antenna in FIG. 52 is a quarter-mode antenna, and includes a first opening end N1 and a second opening end N2. An operating mode of the main radiator 0001 is the first quarter mode. The first ground conductive member n1 and the second ground conductive member n2 are located on a same side of the first feed point m1. A distance between an equivalent center of the first ground conductive member n1 and the first opening end N1 is less than 1/4 wavelength, and a distance between an equivalent center of the second ground conductive member n2 and the first opening end N1 is greater than 1/4 wavelength and less than 1/2 wavelength.

An operating mode of the parasitic radiator 0002 is the second quarter mode. A distance between an equivalent center of the third ground conductive member n3 and the second opening end N2 is less than a 1/4 wavelength size of a second mode, and a distance between an equivalent center of the fourth ground conductive member n4 and the second opening end N2 is greater than a 1/4 wavelength of the second mode and less than 1/2 wavelength.

A resonance frequency of the parasitic radiator 0002 in a quarter mode is greater than a resonance frequency of the main radiator 0001 in the quarter mode.

Therefore, the two ground conductive members are disposed, so that a caliber of the parasitic radiator can be increased.

The antenna element in the foregoing embodiment may be made of a metal bezel of an electronic device. In another embodiment of this application, the antenna element may be disposed by using a printed circuit board of the electronic device, or may be disposed on the printed circuit board of the electronic device by using a support, so that limitations on a size and a shape of the antenna element are reduced.

For example, as shown in FIG. 53, the antenna element may be of a ring structure, including a first end N1 and a second end N2. A feed point m1, a first ground conductive member n1, and a second ground conductive member n2 are disposed on the antenna element. An overall size of an antenna is greater than 1/2 wavelength.

A size from an equivalent center of the first ground conductive member n1 to the first end N1 is greater than 1/4 wavelength and less than 1/2 wavelength. A size from an equivalent center of the second ground conductive member n2 to the first end N1 is greater than 1/2 wavelength, and an inductance of the ground conductive member is greater than 2 nH.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An antenna apparatus, comprising a radiator, wherein the radiator comprises a first end and a second end, and a feed point and a ground point are disposed on the radiator;
a distance between the feed point on the radiator and the first end is greater than a distance between the feed point and the second end; and
a first ground conductive member and a second ground conductive member are disposed between the feed point and the first end, one end of the ground conductive member is coupled to the radiator, and the other end of the ground conductive member is coupled to ground, wherein the radiator is configured to generate two resonances: a first resonance and a second resonance, and a frequency of the first resonance is greater than a frequency of the second resonance.

2. The antenna apparatus according to claim 1, wherein an operating mode of the radiator comprises a half-wavelength mode corresponding to the first resonance and a quarter-wavelength mode corresponding to the second resonance.

3. The antenna apparatus according to claim 1 or 2, wherein at least one of the first resonance and the second resonance is used to cover at least one band in low bands from 699 MHz to 960 MHz.

4. The antenna apparatus according to claim 3, wherein a difference between a center frequency of the first resonance and a center frequency of the second resonance is less than or equal to 350 MHz.

5. The antenna apparatus according to claim 3 or 4, wherein the radiator is an L-shaped radiator, and a distance between the first end of the radiator and the other edge of the L-shaped radiator is within a range of 60 mm to 120 mm.

6. The antenna apparatus according to any one of claims 1 to 5, wherein the ground conductive member and the radiator are integrally formed.

7. The antenna apparatus according to any one of claims 1 to 5, wherein at least one of the first ground conductive member and the second ground conductive member is a single conductive member, one end of the single conductive member is connected to the radiator, and the other end of the single conductive member is connected to a ground plane.

8. The antenna apparatus according to any one of claims 1 to 5, wherein at least one of the first ground conductive member and the second ground conductive member comprises a single conductive member and an inductive member, wherein one end of the single conductive member is connected to the radiator, the other end of the single conductive member is connected to the inductive member, and the inductive member is connected to a ground plane.

9. The antenna apparatus according to claim 6 or 7, wherein lengths of the first ground conductive member and the second ground conductive member are within a range of 4 mm to 12 mm.

10. The antenna apparatus according to claim 6 or 7, wherein lengths of the first ground conductive member and the second ground conductive member are within a range of 7 mm to 10 mm.

11. The antenna apparatus according to claim 9 or 10, wherein a length difference between the first ground conductive member and the second ground conductive member is within 4 mm.

12. The antenna apparatus according to claim 9 or 10, wherein a length difference between the first ground conductive member and the second ground conductive member is within 2 mm.

13. The antenna apparatus according to any one of claims 1 to 12, wherein a distance between an equivalent center of the first ground conductive member and the first end of the radiator along the first ground conductive member and the radiator is less than 1/4 of a first wavelength and greater than 1/8 of the first wavelength, and the first wavelength corresponds to the center frequency of the first resonance; and
a connection point of the second ground conductive member and the radiator is located between the feed point and a connection point of the first ground conductive member and the radiator, and a distance between an equivalent center of the second ground conductive member and the second end of the radiator along the second ground conductive member and the radiator is less than 1/4 of a second wavelength and greater than 1/8 of the second wavelength, and the second wavelength corresponds to the center frequency of the second resonance.

14. The antenna apparatus according to any one of claims 1 to 13, wherein a distance between the equivalent center of the second ground conductive member and the feed point is greater than the distance between the feed point and the second end.

15. The antenna apparatus according to any one of claims 1 to 14, wherein a distance between the first end of the radiator and the connection point of the first ground conductive member and the radiator is 1/4 to 1/2 of a total length of the radiator.

16. The antenna apparatus according to any one of claims 1 to 15, wherein a distance between the first end of the radiator and the connection point of the second ground conductive member and the radiator is 1/4 to 1/2 of the total length of the radiator.

17. The antenna apparatus according to claim 16, wherein a distance between a physical center of the radiator and the connection point of the second ground conductive member and the radiator is less than or equal to 5 mm.

18. The antenna apparatus according to any one of claims 1 to 17, wherein the length of the radiator is greater than 1/2 of the second wavelength and less than 3/4 of the second wavelength.

19. The antenna apparatus according to any one of claims 1 to 18, wherein the antenna apparatus further comprises a switch, wherein one end of the switch is coupled to the radiator, the other end of the switch is coupled to the ground plane, and a coupling point of the switch and the radiator is located between the second ground conductive member and the second end.

20. An electronic device, comprising a bezel and the antenna apparatus according to any one of claims 1 to 19, wherein the bezel is disposed around a periphery of the electronic device, the bezel comprises a first slot, a second slot, and a conductive bezel located between the first slot and the second slot, and at least a part of the radiator of the antenna apparatus is formed by the conductive bezel.
